# EUROPEAN PATENT APPLICATION

(11) **EP 4 306 325 A1**
(43) Date of publication of application: **17.01.2024**
(21) Application number: 22766687.2
(22) Date of filing: 03.02.2022
(51) Int. Cl.: B41J 2/01, C09D 11/40, B41M 5/00

(54) **IMAGE RECORDING METHOD, IMAGE RECORDED MATERIAL AND INKSET, AND LAMINATE AND MANUFACTURING METHOD THEREOF**

(30) Priority: 09.03.2021 JP 2021037728
(71) Applicant: FUJIFILM Corporation, Tokyo 106-8620 (JP)
(72) Inventor: IKOSHI Masao, Ashigarakami-gun, Kanagawa 258-8577 (JP); MIZOE Taiga, Ashigarakami-gun, Kanagawa 258-8577 (JP)
(74) Representative: Klunker IP Patentanwälte PartG mbB
(86) International application number: PCT/JP2022/004151
(87) International publication number: WO 2022/190722

(57) **Abstract**

Provided are an image recording method that enables recording of an image with an excellent covering property and excellent lamination strength with a base material for lamination, and applications thereof. The image recording method is an image recording method including a step of preparing a white ink that contains a white pigment, a first organic solvent having a boiling point of 120°C or higher, and water, a step of preparing a colored ink that contains a colored pigment other than the white pigment, a second organic solvent having a boiling point of 120°C or higher, and water, and a step of recording an image by applying each of the white ink and the colored ink onto an impermeable base material, in which an image is recorded in the step of recording an image under conditions that a total mass of the first organic solvent and the second organic solvent to be applied per unit area is 5.5 g/m² or less, and a mass of the white pigment to be applied per unit area is 0.4 g/m² or greater in a region where a region to which the white ink is applied and a region to which the colored ink is applied overlap each other in plan view.

## Description

### BACKGROUND OF THE INVENTION

### 1. Field of the Invention

The present disclosure relates to an image recording method, an image recorded material, an ink set, and a laminate and a production method thereof.

### 2. Description of the Related Art

In the related art, various examinations have been conducted on image recording carried out using a white ink and a colored ink other than the white ink.

For example, JP2018-94902A describes an ink set including a non-white ink that contains a non-white coloring material having a volume average particle diameter of 30 to 110 nm and thermoplastic resin particles, and a white ink that contains a white coloring material and thermoplastic resin particles.

### SUMMARY OF THE INVENTION

An image to be recorded with a white ink is required to have a low light transmittance (also referred to as "covering property") in some cases. For example, it is considered that in a case where an image is recorded on a surface of a colored base material, visual recognition of the color of the base material through the image is suppressed due to a high covering property of the image. Further, it is considered that in a case where an image is recorded on a surface of a transparent base material, degradation of the visibility of the image caused by transmission of light through the transparent base material and the image is suppressed due to the high covering property of the image. Further, it is also known that an image recorded using a white ink is used as a base to be recorded under other colored ink images. The visibility of a colored ink image is considered to be improved since it is possible to suppress the color of the base material from being visible or to suppress light from being transmitted through the base material and the image by using an image with a high covering property as the base, as described above.

However, an image is recorded on an impermeable base material to obtain an image recorded material, and a base material for lamination is laminated on the image in the image recorded material in some cases. In this case, the lamination strength between the image recorded material and the base material for lamination is required to be improved.

The present disclosure has been made in view of the above-described circumstances, and an object to be achieved by an embodiment of the present disclosure is to provide an image recording method and an ink set that enable recording of an image with an excellent covering property and excellent lamination strength with a base material for lamination.

An object to be achieved by another embodiment of the present disclosure is to provide an image recorded material including an image with an excellent covering property and excellent lamination strength with a base material for lamination.

An object to be achieved by still another embodiment of the present disclosure is to provide a laminate having excellent lamination strength with a base material for lamination, and a method of producing a laminate that enables production of the laminate.

The present disclosure includes the following aspects.
<1> An image recording method comprising: a step of preparing a white ink that contains a white pigment, a first organic solvent having a boiling point of 120°C or higher, and water; a step of preparing a colored ink that contains a colored pigment other than the white pigment, a second organic solvent having a boiling point of 120°C or higher, and water; and a step of recording an image by applying each of the white ink and the colored ink onto an impermeable base material, in which an image is recorded in the step of recording an image under conditions that a total mass of the first organic solvent and the second organic solvent to be applied per unit area is 5.5 g/m² or less, and a mass of the white pigment to be applied per unit area is 0.4 g/m² or greater in a region where a region to which the white ink is applied and a region to which the colored ink is applied overlap each other in plan view.
<2> The image recording method according to <1>, in which a content of the first organic solvent is 30% by mass or less with respect to a total mass of the white ink, and a content of the second organic solvent is 30% by mass or less with respect to a total mass of the colored ink.
<3> The image recording method according to <1> or <2>, further comprising: a step of preparing a pretreatment liquid that contains an aggregating agent and water, in which in the step of recording an image, the image is recorded by applying the pretreatment liquid onto the impermeable base material and applying each of the white ink and the colored ink onto the impermeable base material.
<4> The image recording method according to <3>, in which the pretreatment liquid does not contain a third organic solvent having a boiling point of 120°C or higher, or in a case where the pretreatment liquid contains a third organic solvent having a boiling point of 120°C or higher, a content of the third organic solvent having a boiling point of 120°C or higher is 15% by mass or less with respect to a total amount of the pretreatment liquid.
<5> The image recording method according to <4>, in which in the step of recording an image, the image is recorded under a condition that a total mass of the first organic solvent, the second organic solvent, and the third organic solvent to be applied per unit area is 5.5 g/m² or less in a region where a region to which the pretreatment liquid is applied, a region to which the white ink is applied, and a region to which the colored ink is applied overlap each other in plan view.
<6> The image recording method according to <4> or <5>, in which in the step of recording an image, the image is recorded under a condition that a mass of the third organic solvent to be applied per unit area is 0.2 g/m² or less in a region where a region to which the pretreatment liquid is applied, a region to which the white ink is applied, and a region to which the colored ink is applied overlap each other in plan view.
<7> The image recording method according to any one of <1> to <6>, in which the white ink further contains a pigment dispersant, and the pigment dispersant is a polymer having a crosslinked structure or a block polymer.
<8> The image recording method according to any one of <1> to <7>, in which a weighted average value of solubility parameters of the organic solvents contained in each of the white ink and the colored ink is 28 MPa^{1/2} or less.
<9> The image recording method according to any one of <1> to <8>, in which the first organic solvent includes a first organic solvent A having a boiling point of 120°C to 200°C, a proportion of the first organic solvent A in all organic solvents contained in the white ink is 50% by mass or greater, and the first organic solvent A includes at least one kind of alkylene glycol and at least one kind of alkylene glycol alkyl ether.
<10> The image recording method according to <9>, in which the first organic solvent A includes at least one kind of alkylene glycol and at least two kinds of alkylene glycol alkyl ethers.
<11> The image recording method according to <9> or <10>, in which a mass ratio of a content of the alkylene glycol to a content of the alkylene glycol alkyl ethers is 15.0 or less.
<12> The image recording method according to any one of <1> to <11>, in which the second organic solvent includes a second organic solvent A having a boiling point of 120°C to 200°C, a proportion of the second organic solvent A in all organic solvents contained in the colored ink is 50% by mass or greater, and the second organic solvent A includes at least one kind of alkylene glycol and at least one kind of alkylene glycol alkyl ether.
<13> A method of producing a laminate, comprising: a step of recording an image on an impermeable base material using the image recording method according to any one of <1> to <12>; and a step of laminating a base material for lamination on the impermeable base material on a side where the image has been recorded, to obtain a laminate.
<14> An image recorded material comprising: an impermeable base material; and an image recorded on the impermeable base material, in which the image includes a white ink layer in contact with the impermeable base material and containing a white pigment and a colored ink layer in contact with the white ink layer and containing a colored pigment other than the white pigment and has a region where the white ink layer and the colored ink layer overlap each other in plan view, and a mass of the white pigment per unit area in the white ink layer is 0.4 g/m² or greater.
<15> An image recorded material comprising: an impermeable base material; and an image recorded on the impermeable base material, in which the image includes a pretreatment liquid layer in contact with the impermeable base material and containing an aggregating agent, a white ink layer in contact with the pretreatment liquid layer and containing a white pigment, and a colored ink layer in contact with the white ink layer and containing a colored pigment other than the white pigment and has a region where the pretreatment liquid layer, the white ink layer, and the colored ink layer overlap each other in plan view, and a mass of the white pigment per unit area in the white ink layer is 0.4 g/m² or greater.
<16> A laminate comprising: the image recorded material according to <14> or <15>; and a base material for lamination that is laminated on the image of the image recorded material.
<17> An ink set comprising: a white ink that contains a white pigment, a pigment dispersant, an organic solvent, and water; and a colored ink that contains a colored pigment other than the white pigment, an organic solvent, and water, in which the pigment dispersant is a polymer having a crosslinked structure or a block polymer, and a weighted average value of solubility parameters of the organic solvents contained in each of the white ink and the colored ink is 28 MPa^{1/2} or less.
<18> An ink set comprising: a white ink that contains a white pigment, a pigment dispersant, an organic solvent, and water; and a colored ink that contains a colored pigment other than the white pigment and water, in which the pigment dispersant is a polymer having a crosslinked structure or a block polymer, and the organic solvent includes at least one kind of alkylene glycol having a boiling point of 120°C to 200°C and at least one kind of alkylene glycol alkyl ether having a boiling point of 120°C to 200°C.
<19> The ink set according to <18>, in which the organic solvent includes at least one kind of alkylene glycol having a boiling point of 120°C to 200°C and at least two kinds of alkylene glycol alkyl ethers having a boiling point of 120°C to 200°C.

According to an embodiment of the present disclosure, it is possible to provide an image recording method and an ink set that enable recording of an image with an excellent covering property and excellent lamination strength with a base material for lamination.

According to another embodiment of the present disclosure, it is possible to provide an image recorded material including an image with an excellent covering property and excellent lamination strength with a base material for lamination.

According to still another embodiment of the present disclosure, it is possible to provide a laminate having excellent lamination strength with a base material for lamination, and a method of producing a laminate that enables production of the laminate.

### DESCRIPTION OF THE PREFERRED EMBODIMENTS

Hereinafter, an image recording method, an image recorded material, an ink set, and a laminate and a production method thereof according to the present disclosure will be described in detail.

In the present specification, a numerical range shown using "to" indicates a range including the numerical values described before and after "to" as a minimum value and a maximum value, respectively.

In a numerical range described in a stepwise manner in the present disclosure, an upper limit or a lower limit described in a certain numerical range may be replaced with an upper limit or a lower limit in another numerical range described in a stepwise manner.

Further, in a numerical range described in the present disclosure, an upper limit or a lower limit described in a certain numerical range may be replaced with a value described in an example.

In the present disclosure, in a case where a plurality of substances corresponding to respective components in a composition are present, the amount of the respective components in the composition indicates the total amount of the plurality of substances present in the composition unless otherwise specified.

In the present invention, a combination of two or more preferred embodiments is a more preferred embodiment.

In the present disclosure, the meaning of the term "step" includes not only an independent step but also a step whose intended purpose is achieved even in a case where the step is not clearly distinguished from other steps.

In the present specification, the term "image" denotes an entire film formed by applying a pretreatment liquid and an ink in this order, and the term "image recording" denotes formation of an image (that is, the film).

Further, the concept of "image" in the present specification also includes a solid image.

In the present specification, the concept of "(meth)acrylate" includes both acrylate and methacrylate. In addition, the concept of "(meth)acryl" includes both acryl and methacryl.

In the present specification, the concept "alkylene glycol" includes both monoalkylene glycol and polyalkylene glycol. Further, the concept "alkylene glycol alkyl ether" includes monoalkylene glycol monoalkyl ether, monoalkylene glycol polyalkyl ether, polyalkylene glycol monoalkyl ether, and polyalkylene glycol polyalkyl ether.

### [Image recording method]

An image recording method according to the present disclosure is an image recording method including a step of preparing a white ink that contains a white pigment, a first organic solvent having a boiling point of 120°C or higher, and water, a step of preparing a colored ink that contains a colored pigment other than the white pigment, a second organic solvent having a boiling point of 120°C or higher, and water, and a step of recording an image by applying each of the white ink and the colored ink onto an impermeable base material, in which in a region where a region to which the white ink is applied and a region to which the colored ink is applied overlap each other in plan view, an image is recorded in the step of recording an image under conditions that the total mass of the first organic solvent and the second organic solvent to be applied per unit area is 5.5 g/m² or less, and the mass of the white pigment to be applied per unit area is 0.4 g/m² or greater.

According to the image recording method of the present disclosure, an image recorded material including an impermeable base material and an image recorded on the impermeable base material and having excellent lamination strength in a case where a base material for lamination is laminated on the image can be obtained.

Here, the lamination strength denotes peel strength in a case of peeling the base material for lamination and the image recorded material from the laminate formed by lamination [that is, the laminate having a laminated structure of "the base material for lamination/the image recorded material" (specifically, a laminated structure of "the base material for lamination/the image/the impermeable base material")].

Further, according to the image recording method of the present disclosure, an image recorded material having an excellent covering property can be obtained.

The reason why the above-described effect is exhibited by the image recording method of the present disclosure is assumed as follows.

In order to improve the lamination strength in the laminate, it is necessary to improve the adhesiveness between the impermeable base material and the image and to improve the adhesiveness between the image and the base material for lamination.

In the image recording method of the present disclosure, each of the white ink and the colored ink is applied onto the impermeable base material. The white ink and the colored ink are applied under a condition that a region where a region to which the white ink is applied and a region to which the colored ink is applied overlap each other in plan view is generated. The present inventors have focused on the first organic solvent having a boiling point of 120°C or higher which is contained in the white ink and the second organic solvent having a boiling point of 120°C or higher which is contained in the colored ink. In the image recording method of the present disclosure, each of the white ink and the colored ink is applied under a condition that the total mass of the first organic solvent and the second organic solvent to be applied per unit area in the overlapping region is 5.5 g/m² or less. It is considered that in a case where the total mass thereof to be applied described above is 5.5 g/m² or less, a decrease in image intensity (for example, rub resistance, blocking resistance, or the like) is suppressed so that the image intensity is ensured. As a result, a decrease in adhesiveness between the image and the base material for lamination due to the decrease in the image intensity is considered to be suppressed.

Further, in the image recording method of the present disclosure, the white ink is applied under a condition that the mass of the white pigment to be applied per unit area in the above-described overlapping region is 0.4 g/m² or greater. The white pigment is assumed to hold the peripheral organic solvent on the impermeable base material. Therefore, it is considered that in a case where the mass thereof to be applied is 0.4 g/m² or greater, the image intensity is ensured and the adhesiveness between the image and the base material for lamination is excellent. Further, in a case where the mass thereof to be applied is 0.4 g/m² or greater, transmission of light is suppressed, and an image recorded material having an excellent covering property can be obtained.

Hereinafter, each step of the image recording method according to the present disclosure will be described.

### <White ink preparation step>

The image recording method of the present disclosure includes a step of preparing a white ink that contains a white pigment, a first organic solvent having a boiling point of 120°C or higher, and water (hereinafter, referred to as "white ink preparation step").

### (White pigment)

The white ink prepared in the white ink preparation step contains a white pigment.

The white pigment may be a pigment exhibiting a white color, and the kind thereof is not particularly limited. The white color denotes a color with no absorption of a specific wavelength or with less absorption of a specific wavelength. Examples of the white pigment include inorganic pigments such as titanium oxide, strontium titanate, barium titanate, zinc oxide, magnesium oxide, zirconium oxide, aluminum oxide, barium sulfate, silica, talc, mica, aluminum hydroxide, calcium silicate, aluminum silicate, and zinc sulfide. The white pigment is preferably particles having titanium atoms and more preferably titanium oxide.

The average particle diameter of the white pigment is preferably in a range of 10 nm to 550 nm, more preferably in a range of 100 nm to 450 nm, and still more preferably in a range of 150 nm to 400 nm. The color reproducibility is enhanced in a case where the average particle diameter is 550 nm or less, and the jetting stability is enhanced in a case where an image is recorded by an inkjet recording method. Further, the light resistance is enhanced in a case where the average particle diameter is 10 nm or greater. In addition, the particle size distribution of the pigment may be any of a wide particle size distribution or a monodispersed particle size distribution. Further, the average particle diameter and the particle size distribution of the pigment are acquired by measuring the volume average particle diameter using a particle size distribution measuring device, for example, "NANOTRAC UPA-EX150" (product name, manufactured by Nikkiso Co., Ltd.) according to a dynamic light scattering method. In a case where the pigment is coated with the pigment dispersant, the average particle diameter of the pigment denotes the average particle diameter of the pigment coated with the pigment dispersant.

From the viewpoint that the mass of the white pigment to be applied is set to 0.4 g/m2 or greater, the content of the white pigment is preferably in a range of 5% by mass to 20% by mass and more preferably in a range of 8% by mass to 15% by mass with respect to the total amount of the white ink.

### (First organic solvent having boiling point 120°C or higher)

The white ink prepared in the white ink preparation step contains a first organic solvent having a boiling point of 120°C or higher. Hereinafter, the organic solvent having a boiling point of 120°C or higher which is contained in the white ink is also simply referred to as "first organic solvent".

In the present disclosure, "boiling point" denotes a boiling point at 1 atm (101325 Pa). The boiling point is measured by a boiling point meter, and is measured using, for example, a boiling point measuring device (product name: "DosaTherm 300", manufactured by Titan Technologies, K.K.).

Examples of the organic solvent having a boiling point of 120°C or higher include alcohol such as 1,3-butanediol (207°C), 1,4-butanediol (228°C), benzyl alcohol (205°C), or terpineol (217°C); alkylene glycol such as ethylene glycol (197°C), diethylene glycol (244°C), triethylene glycol (287°C), propylene glycol (187°C), or dipropylene glycol (230°C); alkylene glycol alkyl ether such as diethylene glycol monomethyl ether (194°C), diethylene glycol monoethyl ether (202°C), diethylene glycol monobutyl ether (231°C), diethylene glycol dimethyl ether (162°C), diethylene glycol ethyl methyl ether (176°C), diethylene glycol isopropyl methyl ether (179°C), triethylene glycol monomethyl ether (249°C), triethylene glycol dimethyl ether (216°C), propylene glycol monomethyl ether (121°C), propylene glycol monobutyl ether (170 °C), propylene glycol monopropyl ether (150°C), 3-methoxy-3-methyl-1-butanol (174°C), diethylene glycol monohexyl ether (261°C or higher), propylene glycol monomethyl ether propionate (160°C), methyl cellosolve (ethylene glycol monomethyl ether, 125°C), ethyl cellosolve (ethylene glycol monoethyl ether, 135°C), butyl cellosolve (ethylene glycol monobutyl ether, 171°C), ethylene glycol mono-tert-butyl ether (153°C), tripropylene glycol monomethyl ether (243°C), or dipropylene glycol monomethyl ether (188°C); an ester such as ethylene glycol monomethyl ether acetate (145°C), diethylene glycol monoethyl ether acetate (217°C), ethyl acetate (154°C), ethyl lactate (154°C), or 3-methoxybutyl acetate (172°C); and a ketone such as diacetone alcohol (169°C), cyclohexanone (156°C), or cyclopentanone (131°C). Further, the numerical values in parentheses denote the boiling points.

In a case where the white ink contains the first organic solvent, the j ettability and the re-jettability of the white ink after suspension of printing (hereinafter, also simply referred to as "re-jettability") are excellent. The white ink may contain an organic solvent having a boiling point of lower than 120°C. From the viewpoint of j ettability and re-jettability, the proportion of the first organic solvent in the organic solvent contained in the white ink is preferably 50% by mass or greater, more preferably 80% by mass or greater, and still more preferably 90% by mass or greater. The proportion thereof may be 100% by mass. That is, all the organic solvents contained in the white ink may be the first organic solvents.

The content of the first organic solvent in the white ink is preferably 30% by mass or less, more preferably 28% by mass or less, and still more preferably 26% by mass or less with respect to the total amount of the white ink. In a case where the content of the first organic solvent is 30% by mass or less, the image intensity is ensured and the adhesiveness between the image and the base material for lamination is improved even in the overlapping region. As a result, the lamination strength is improved.

The lower limit of the content of the first organic solvent is not particularly limited as long as the content thereof is greater than 0% by mass, but from the viewpoints of the j ettability and the covering property, the content of the first organic solvent is preferably 10% by mass or greater, more preferably 15% by mass or greater, and still more preferably 20% by mass or greater with respect to the total amount of the white ink.

From the viewpoint of further improving the lamination strength of the image recorded material, it is particularly preferable that the white ink contains an organic solvent having a boiling point of 120°C to 200°C (hereinafter, also referred to as "first organic solvent A"). The proportion of the first organic solvent A in the organic solvent contained in the white ink is preferably 50% by mass or greater, more preferably 90% by mass or greater, and still more preferably 95% by mass or greater. The proportion thereof may be 100% by mass. That is, all the organic solvents contained in the white ink may be the first organic solvents A.

It is preferable that the first organic solvent A includes at least one kind selected from the group consisting of alkylene glycol and alkylene glycol alkyl ether. Further, it is more preferable that the first organic solvent A includes at least one kind of alkylene glycol and at least one kind of alkylene glycol alkyl ether. Further, it is more preferable that the first organic solvent A includes at least one kind of alkylene glycol and at least two kinds of alkylene glycol alkyl ethers.

It is preferable that the alkylene glycol and the alkylene glycol alkyl ether of the first organic solvent A are selected from the group consisting of propylene glycol monomethyl ether, propylene glycol monoethyl ether, propylene glycol monopropyl ether, propylene glycol monobutyl ether, ethylene glycol monopropyl ether, ethylene glycol monobutyl ether, propylene glycol, dipropylene glycol monomethyl ether, diethylene glycol monoethyl ether, and ethylene glycol.

In a case where the white ink contains an organic solvent including at least one kind of alkylene glycol having a boiling point of 120°C to 200°C and at least one kind of alkylene glycol alkyl ether having a boiling point of 120°C to 200°C, the drying properties of the white ink on the base material are improved. In this manner, the lamination strength and the adhesiveness are improved.

Further, in a case where the white ink contains an organic solvent including at least one kind of alkylene glycol having a boiling point of 120°C to 200°C and at least two kinds of alkylene glycol alkyl ethers having a boiling point of 120°C to 200°C, the drying properties of the white ink on the base material are improved. In this manner, the lamination strength and the adhesiveness are further improved.

In a case where the white ink contains alkylene glycol alkyl ether and alkylene glycol alkyl ether, the mass ratio of the content of the alkylene glycol to the content of the alkylene glycol alkyl ether ("content of alkylene glycol"/"content of alkylene glycol alkyl ether") is preferably 20.0 or less, more preferably 18.0 or less, still more preferably 15.0 or less, even still more preferably 10.0 or less, and particularly preferably 6.0 or less from the viewpoint of further improving the lamination strength and the adhesiveness. The lower limit of the mass ratio is not particularly limited, but is preferably 1.0, more preferably 2.0, still more preferably 3.0, and even still more preferably 4.0 from the viewpoint of re-jettability.

The white ink may contain an organic solvent having a boiling point of higher than 200°C and 240°C or lower (hereinafter, referred to as "first organic solvent B") or an organic solvent having a boiling point of higher than 240°C (hereinafter, referred to as "first organic solvent C") in addition to the first organic solvent A. Further, the white ink may contain both the first organic solvent B and the first organic solvent C in addition to the first organic solvent A.

From the viewpoint of further improving the lamination strength and the adhesiveness of the image recorded material, the total proportion of the first organic solvent A and the first organic solvent B in the organic solvent contained in the white ink is preferably 90% by mass or greater, more preferably 95% by mass or greater, and still more preferably 100% by mass. That is, it is preferable that all the organic solvents contained in the white ink are organic solvents consisting of the first organic solvent A and the first organic solvent B, or the first organic solvent A. It is more preferable that all the organic solvents contained in the white ink are the first organic solvent A.

Examples of the first organic solvent B include diethylene glycol monobutyl ether, dipropylene glycol, 1,2-hexanediol, and ethylene glycol monohexyl ether.

From the viewpoint of further improving the lamination strength and the adhesiveness of the image recorded material, the proportion of the first organic solvent C in the organic solvent contained in the white ink is preferably 10% by mass or less. The proportion thereof may be 0% by mass. That is, the white ink may not contain the first organic solvent C.

Examples of the first organic solvent C include diethylene glycol and triethylene glycol.

The weighted average value of the solubility parameters (SP value) of the organic solvents contained in the white ink is preferably 28 MPa^{1/2} or less. The weighted average value of the SP values is calculated using the following equation. In the equation, Sᵢ represents the SP value of the i-th organic solvent contained in the white ink, and Wᵢ represents the content (% by mass) of the i-th organic solvent with respect to the total amount of the white ink.

### Weighted average value of solubility parameter = ΣSᵢWᵢ/ΣWᵢ

It is considered that in a case where the weighted average value of the SP values of the organic solvents contained in the white ink is 28 MPa^{1/2} or less, all the organic solvents are likely to volatilize. As a result, the lamination strength of the image recorded material is improved. From the viewpoint of the lamination strength, the weighted average value described above is more preferably 27 MPa^{1/2} or less. From the viewpoints of the j ettability and the re-jettability, the lower limit of the weighted average value described above is preferably 25.5 MPa^{1/2}.

In the present disclosure, the SP value is a value represented by the square root of the molecular aggregation energy and calculated by the method described in R. F. Fedors, Polymer Engineering Science, 14, pp. 147 to 154 (1974), and the SP value is in units of MPa^{1/2}.

Hereinafter, examples of the SP values of the organic solvents are described. The numerical values in parentheses are the SP values.

Examples thereof include propylene glycol (27.6 MPa^{1/2}), ethylene glycol (30.3 MPa^{1/2}), diethylene glycol (30.6 MPa^{1/2}), triethylene glycol (27.8 MPa^{1/2}), tripropylene glycol (24.7 MPa^{1/2}), 2-methyl-1,3-butanediol (28.27 MPa^{1/2}), 1,2-pentanediol (28.64 MPa^{1/2}), 1,5-pentanediol (28.96 MPa^{1/2}), 1,2-hexanediol (21.3 MPa^{1/2}), 1,6-hexanediol (27.66 MPa^{1/2}), glycerin (33.5 MPa^{1/2}), dimethylformamide (30.62 MPa^{1/2}), methanol (28.17 MPa^{1/2}), isopropyl alcohol (28.69 MPa^{1/2}), triethanolamine (32.27 MPa^{1/2}), dipropylene glycol (27.1 MPa^{1/2}), ethylene glycol monoethyl ether (23.5 MPa^{1/2}), ethylene glycol monopropyl ether (21.8 MPa^{1/2}), ethylene glycol monobutyl ether (22.1 MPa^{1/2}), diethylene glycol monomethyl ether (22.98 MPa^{1/2}), diethylene glycol monoethyl ether (22.4 MPa^{1/2}), diethylene glycol monopropyl ether (21.9 MPa^{1/2}), diethylene glycol monobutyl ether (21.5 MPa^{1/2}), triethylene glycol monomethyl ether (22.1 MPa^{1/2}), triethylene glycol monoethyl ether (21.7 MPa^{1/2}), triethylene glycol monobutyl ether (21.1 MPa^{1/2}), propylene glycol monomethyl ether (23.0 MPa^{1/2}), propylene glycol monoethyl ether (22.3 MPa^{1/2}), propylene glycol monopropyl ether (21.8 MPa^{1/2}), propylene glycol monobutyl ether (21.4 MPa^{1/2}), dipropylene glycol monomethyl ether (21.3 MPa^{1/2}), dipropylene glycol monopropyl ether (20.69 MPa^{1/2}), dipropylene glycol monobutyl ether (20.45 MPa^{1/2}), dipropylene glycol t-butyl ether (19.98 MPa^{1/2}), tripropylene glycol monomethyl ether (20.4 MPa^{1/2}), diethylene glycol monohexyl ether (20.91 MPa^{1/2}), ethylene glycol mono-2-ethylhexyl ether (20.46 MPa^{1/2}), and diethylene glycol mono-2-ethylhexyl ether (20.26 MPa^{1/2}).

### (Water)

The white ink prepared in the white ink preparation step contains water. The content of water is not particularly limited and is, for example, in a range of 40% by mass to 70% by mass.

### (Pigment dispersant)

It is preferable that the white ink prepared in the white ink preparation step contains a pigment dispersant in order to disperse the white pigment in water. In the present disclosure, the pigment dispersant has a function of dispersing the pigment. The pigment dispersant is adsorbed on the surface of the pigment and applied to at least a part of the surface of the pigment, and thus the pigment can be dispersed in water. Further, in a case where a self-dispersing pigment that can be dispersed in water even in the absence of a pigment dispersant is used as the white pigment, the white ink may not contain a pigment dispersant.

The form of the pigment dispersant contained in the white ink is not particularly limited and may be any of a random polymer, a block polymer, or a graft polymer. Further, the pigment dispersant contained in the white ink may be a polymer having a crosslinked structure. Among the forms, it is preferable that the pigment dispersant contained in the white ink is a polymer having a crosslinked structure or a block polymer. It is considered that in a case where the pigment dispersant is a polymer having a crosslinked structure or a block polymer, the pigment dispersant is unlikely to be released from the surface of the white pigment, and thus the dispersion stability of the white pigment is high. As a result, in a case where the white ink reacts with the pretreatment liquid, since the white pigment is uniformly aggregated, the image is uniform, the organic solvent is likely to volatilize, and the lamination strength is further improved. Further, even in a case where the pretreatment liquid is not used, the proportion of the solvent in the white ink increases in the process in which water volatilizes after the white ink has landed on the impermeable base material, and the dispersion of the white pigment is likely to be destabilized. Here, in a case where the pigment dispersant is a polymer having a crosslinked structure or a block polymer, non-uniform aggregation of the white pigment is suppressed, the image is uniform, the organic solvent is likely to volatilize, and the lamination strength is further improved.

In the present disclosure, the polymer denotes a compound having a weight-average molecular weight of 1000 or greater.

In the present disclosure, the weight-average molecular weight (Mw) denotes a value measured by gel permeation chromatography (GPC). The measurement according to gel permeation chromatography (GPC) is performed using HLC (registered trademark)-8020 GPC (manufactured by Tosoh Corporation) as a measuring device, three columns of TSKgel (registered trademark) Super Multipore HZ-H (manufactured by Tosoh Corporation, 4.6 mmID × 15 cm), and tetrahydrofuran (THF) as an eluent. Further, the measurement is performed under measurement conditions of a sample concentration of 0.45% by mass, a flow rate of 0.35 ml/min, a sample injection volume of 10 µl, and a measurement temperature of 40°C using an RI detector. Further, the calibration curve is prepared using eight samples of "F-40", "F-20", "F-4", "F-1", "A-5000", "A-2500", "A-1000", and "n-propylbenzene" which are "Standard Samples TSK standard, polystyrene" (manufactured by Tosoh Corporation).

### - Polymer having crosslinked structure -

The polymer having a crosslinked structure is not particularly limited as long as the polymer is a polymer having at least one crosslinked structure in a molecule.

Whether or not the polymer contained in the ink has a crosslinked structure can be determined, for example, by the following method. First, the polymer is separated from the ink by a separation method such as solvent extraction. The presence or absence of the crosslinked structure can be comprehensively determined by analyzing the separated polymer using various analysis methods such as a nuclear magnetic resonance method (NMR), an infrared spectroscopy method (IR), and a thermal analysis method.

The polymer having a crosslinked structure (hereinafter, also referred to as "crosslinked polymer") is formed, for example, by crosslinking an uncrosslinked polymer (hereinafter, also referred to as "uncrosslinked polymer") with a crosslinking agent. It is preferable that the uncrosslinked polymer is a water-soluble polymer.

In the present disclosure, the term "water-soluble" indicates a property in which 1 g or greater of a substance is dissolved in 100 g of water at 25°C. As the "water-soluble" property, a property in which 3 g or greater (more preferably 10 g or greater) of a substance is dissolved in 100 g of water at 25°C is preferable.

Even in a case where the uncrosslinked polymer is water-soluble, the crosslinked polymer is not necessarily water-soluble.

Examples of the uncrosslinked polymer include a vinyl resin, an acrylic resin, a urethane resin, and a polyester resin. Among these, an acrylic resin is preferable as the uncrosslinked polymer.

It is preferable that the uncrosslinked polymer is a polymer containing a functional group that can be crosslinked by a crosslinking agent. Examples of the crosslinkable functional group include a carboxy group or a salt thereof, an isocyanate group, and an epoxy group. Among these, from the viewpoint of improving the dispersibility of the pigment, a carboxy group or a salt thereof is preferable, and a carboxy group is particularly preferable as the crosslinkable functional group. That is, a polymer containing a carboxy group is preferable as the uncrosslinked polymer.

It is preferable that the uncrosslinked polymer is a copolymer having a structural unit derived from a monomer containing a carboxy group (hereinafter, referred to as "carboxy group-containing monomer"). The structural unit derived from a carboxy group-containing monomer contained in a copolymer may be used alone or two or more kinds thereof. The copolymer may be a random copolymer or a block copolymer, but is preferably a random copolymer.

Examples of the carboxy group-containing monomer include (meth)acrylic acid, β-carboxyethyl acrylate, fumaric acid, itaconic acid, maleic acid, and crotonic acid.

From the viewpoints of the crosslinking properties and the dispersibility, (meth)acrylic acid or β-carboxyethyl acrylate is preferable, and (meth)acrylic acid is more preferable as the carboxy group-containing monomer.

The content of the structural unit derived from a carboxy group-containing monomer is preferably in a range of 5% by mass to 40% by mass, more preferably in a range of 10% by mass to 35% by mass, and still more preferably in a range of 10% by mass to 30% by mass with respect to the total amount of the uncrosslinked polymer.

It is preferable that the uncrosslinked polymer has a structural unit derived from a hydrophobic monomer in addition to the structural unit derived from a carboxy group-containing monomer. The structural unit derived from a hydrophobic monomer contained in the copolymer may be used alone or two or more kinds thereof.

Examples of the hydrophobic monomer include (meth)acrylate containing an alkyl group having 1 to 20 carbon atoms, (meth)acrylate having an aromatic ring (such as benzyl (meth)acrylate or phenoxyethyl (meth)acrylate), styrene, and a styrene derivative.

The content of the structural unit derived from a hydrophobic monomer is preferably in a range of 60% by mass to 95% by mass, more preferably in a range of 65% by mass to 90% by mass, and still more preferably in a range of 70% by mass to 90% by mass with respect to the total amount of the uncrosslinked polymer.

The uncrosslinked polymer is preferably a random copolymer having a structural unit derived from a carboxy group-containing monomer and at least one of a structural unit derived from a (meth)acrylate containing an alkyl group having 1 to 20 carbon atoms or a structural unit derived from a (meth)acrylate having an aromatic ring, more preferably a random copolymer having a structural unit derived from (meth)acrylic acid and a structural unit derived from a (meth)acrylate having an aromatic ring, and still more preferably a copolymer having a structural unit derived from (meth)acrylic acid and a structural unit derived from benzyl (meth)acrylate.

The weight-average molecular weight (Mw) of the uncrosslinked polymer is not particularly limited, but is preferably in a range of 3,000 to 300,000, more preferably in a range of 5,000 to 200,000, and still more preferably in a range of 7,000 to 100,000 from the viewpoint of the dispersibility of the white pigment.

The preferable ranges of the weight-average molecular weight of the crosslinked polymer are the same as the preferable ranges of the weight-average molecular weight of the uncrosslinked polymer.

In the present disclosure, the weight-average molecular weight (Mw) is measured by gel permeation chromatography (GPC). In the GPC, HLC-8220 GPC (manufactured by Tosoh Corporation) is used, three columns of TSKgeL Super HZM-H, TSKgeL Super HZ4000, and TSKgeL Super HZ2000 (all trade names manufactured by Tosoh Corporation) are used as columns while being connected in series, and tetrahydrofuran (THF) is used as an eluent. Further, the measurement is performed under conditions of a sample concentration of 0.45% by mass, a flow rate of 0.35 ml/min, a sample injection volume of 10 µl, and a measurement temperature of 40°C using a differential refractive index detector. Further, the calibration curve is prepared using eight samples of "F-40", "F-20", "F-4", "F-1", "A-5000", "A-2500", "A-1000", and "n-propylbenzene" which are "Standard Samples TSK standard, polystyrene" (manufactured by Tosoh Corporation).

It is preferable that the crosslinking agent used in a case of crosslinking the uncrosslinked polymer is a compound having two or more reaction sites with the uncrosslinked polymer (for example, a polymer containing a carboxy group). The crosslinking agent may be used alone or in combination of two or more kinds thereof.

As a combination of the crosslinking agent and the uncrosslinked polymer, a combination of a compound containing two or more epoxy groups (that is, a bifunctional or higher functional epoxy compound) and a polymer containing a carboxy group is preferable. In this combination, a crosslinked structure is formed by the reaction between the epoxy group and the carboxy group. It is preferable that the crosslinked structure is formed by the crosslinking agent after the pigment is dispersed by the uncrosslinked polymer.

Examples of the bifunctional or higher functional epoxy compound include ethylene glycol diglycidyl ether, polyethylene glycol diglycidyl ether, 1,6-hexanediol diglycidyl ether, diethylene glycol diglycidyl ether, polyethylene glycol diglycidyl ether, dipropylene glycol diglycidyl ether, polypropylene glycol diglycidyl ether, and trimethylolpropane triglycidyl ether.

Among these, polyethylene glycol diglycidyl ether, diethylene glycol diglycidyl ether, or trimethylolpropane triglycidyl ether is preferable as the bifunctional or higher functional epoxy compound.

Commercially available products may be used as the crosslinking agent.

Examples of the commercially available products include Denacol EX-321, EX-821, EX-830, EX-850, and EX-851 (manufactured by Nagase ChemteX Corporation).

From the viewpoints of the crosslinking reaction rate and the dispersion stability after crosslinking, the molar ratio between a reaction site (for example, an epoxy group) in the crosslinking agent and a reaction site (for example, a carboxy group) in the uncrosslinked polymer is preferably in a range of 1: 1.1 to 1: 10, more preferably in a range of 1: 1.1 to 1:5, and still more preferably in a range of 1:1.1 to 1:3.

### - Block polymer -

The block polymer is also referred to as a block copolymer, and is a copolymer in which at least two polymers are bonded to each other in a molecule.

It is preferable that the block polymer has a structural unit derived from a hydrophobic monomer and a structural unit derived from a monomer containing an anionic group (hereinafter, referred to as "anionic group-containing monomer").

The structural unit derived from a hydrophobic monomer contained in the block polymer may be used alone or two or more kinds thereof. The structural unit derived from an anionic group-containing monomer contained in the block polymer may be used alone or two or more kinds thereof.

Examples of the structural unit derived from a hydrophobic monomer include an ethylenically unsaturated compound having an aromatic ring structure or an alicyclic structure and a (meth)acrylate containing an alkyl group having 1 to 20 carbon atoms.

The content of the structural unit derived from a hydrophobic monomer is preferably in a range of 35% by mass to 95% by mass, more preferably in a range of 50% by mass to 95% by mass, and still more preferably in a range of 70% by mass to 90% by mass with respect to the total amount of the block polymer.

From the viewpoint of the adsorptivity to the pigment, the hydrophobic monomer contains preferably an ethylenically unsaturated compound having an aromatic ring structure or an alicyclic structure, more preferably an ethylenically unsaturated compound having an alicyclic structure, and still more preferably an ethylenically unsaturated compound having an alicyclic structure having 6 or more carbon atoms.

The content of the structural unit derived from the ethylenically unsaturated compound having an aromatic ring structure or an alicyclic structure is preferably in a range of 10% by mass to 90% by mass, more preferably in a range of 20% by mass to 80% by mass, still more preferably in a range of 30% by mass to 70% by mass, and even still more preferably in a range of 30% by mass to 60% by mass with respect to the total amount of the block polymer.

It is also preferable that the structural unit derived from the hydrophobic monomer contains a (meth)acrylate containing an alkyl group having 1 to 20 carbon atoms. The alkyl group may be any of linear or branched.

Examples of the (meth)acrylate containing an alkyl group having 1 to 20 carbon atoms include methyl (meth)acrylate, ethyl (meth)acrylate, n-propyl (meth)acrylate, n-butyl (meth)acrylate, 2-ethylhexyl (meth)acrylate, and octyl (meth)acrylate.

The content of the structural unit derived from a (meth)acrylate containing an alkyl group having 1 to 20 carbon atoms is preferably in a range of 10% by mass to 90% by mass, more preferably in a range of 20% by mass to 80% by mass, still more preferably in a range of 30% by mass to 70% by mass, and particularly preferably in a range of 40% by mass to 60% by mass with respect to the total amount of the block polymer.

Examples of the anionic group in the structural unit derived from an anionic group-containing monomer include a carboxy group, a salt of the carboxy group, a sulfo group, a salt of the sulfo group, a phosphoric acid group, a salt of the phosphoric acid group, a phosphonic acid group, and a salt of the phosphonic acid group.

Examples of the counterion in a salt include an alkali metal ion such as a sodium ion, a potassium ion, or a lithium ion, an alkaline earth metal ion such as a calcium ion or a magnesium ion, and an ammonium ion.

Among these, a carboxy group or a salt of the carboxy group is preferable as the anionic group. Examples of the anionic group-containing monomer include (meth)acrylic acid, β-carboxyethyl acrylate, fumaric acid, itaconic acid, maleic acid, and crotonic acid. Among these, (meth)acrylic acid is preferable as the anionic group-containing monomer.

The content of the structural unit derived from the anionic group-containing monomer is preferably in a range of 1% by mass to 30% by mass, more preferably in a range of 2% by mass to 25% by mass, and still more preferably in a range of 3% by mass to 20% by mass with respect to the total amount of the block polymer.

Whether or not the polymer contained in the ink is a block polymer can be determined by, for example, the following method. First, the polymer is separated from the ink by a separation method such as solvent extraction. The physical properties such as the glass transition temperature are measured by performing analysis on the separated polymer using various analysis methods such as a nuclear magnetic resonance method (NMR), an infrared spectroscopy method (IR), and a thermal analysis method, and thus it is possible to comprehensively determine whether the polymer is a block polymer.

For example, a form in which the block polymer contained in the ink has two or more glass transition temperatures may also be described as a preferable form in the determining method described above.

The weight-average molecular weight (Mw) of the block polymer is not particularly limited, but is preferably in a range of 3,000 to 100,000, more preferably in a range of 5,000 to 80,000, and still more preferably in a range of 10,000 to 60,000 from the viewpoint of the dispersibility of the pigment.

The mixing ratio between the white pigment and the pigment dispersant is preferably in a range of 1:0.02 to 1:2, more preferably in a range of 1:0.03 to 1:1.5, and still more preferably in a range of 1:0.04 to 1:1 in terms of the mass.

As a dispersion apparatus for dispersing the pigment, a known dispersion apparatus can be used, and examples thereof include a ball mill, a sand mill, a beads mill, a roll mill, a jet mill, a paint shaker, an attritor, an ultrasonic disperser, and a disper.

### (Resin particles)

From the viewpoint of improving the lamination strength of the image recorded material, it is preferable that the white ink prepared in the white ink preparation step contains at least one kind of resin particles. It is preferable that the white ink contains resin particles which are particles formed of a resin, in addition to the pigment dispersant.

In a case where the white ink is applied onto the impermeable base material onto which the pretreatment liquid has been applied, the aggregating agent contained in the pretreatment liquid comes into contact with the resin particles contained in the white ink and destabilizes the dispersion of the resin particles, and thus the viscosity of the white ink is increased. In this manner, the white ink is fixed on the impermeable base material, and the lamination strength of the image recorded material is improved.

It is preferable that the resin constituting the resin particles is a water-insoluble polymer. The term "water-insoluble" in the water-insoluble polymer denotes a property that the amount of the polymer to be dissolved in 100 g of distilled water at 25°C is less than 2 g.

The resin particles include preferably at least one of particles consisting of an acrylic resin (hereinafter, referred to as "acrylic resin particles") or particles consisting of a urethane resin (hereinafter, also referred to as "urethane resin particles") and preferably acrylic resin particles.

It is preferable that the resin particles are self-dispersing resin particles.

Examples of the self-dispersing resin particles include resin particles described in paragraphs 0062 to 0076 of JP2016-188345A and paragraphs 0109 to 0140 of WO2013/180074A.

It is preferable that the resin in the resin particles is an acrylic resin having a structural unit derived from a (meth)acrylate having an aromatic ring structure or an alicyclic structure, a structural unit derived from (meth)acrylic acid, and a structural unit derived from alkyl (meth)acrylate containing an alkyl group having 1 to 4 carbon atoms.

As the (meth)acrylate having an alicyclic structure, alkyl (meth)acrylate containing a cycloalkyl group having 3 to 10 carbon atoms is preferable, at least one selected from the group consisting of cyclohexyl (meth)acrylate, isobornyl (meth)acrylate, adamantyl (meth)acrylate, and dicyclopentanyl (meth)acrylate is preferable, and at least one selected from the group consisting of isobornyl (meth)acrylate, adamantyl (meth)acrylate, and dicyclopentanyl (meth)acrylate is more preferable.

It is preferable that the (meth)acrylate having an aromatic ring structure is phenoxyethyl (meth)acrylate or benzyl (meth)acrylate.

Examples of the resin in the resin particles include a phenoxyethyl acrylate/methyl methacrylate/acrylic acid copolymer (50/45/5), a phenoxyethyl acrylate/benzyl methacrylate/isobutyl methacrylate/methacrylic acid copolymer (30/35/29/6), a phenoxyethyl methacrylate/isobutyl methacrylate/methacrylic acid copolymer (50/44/6), a phenoxyethyl acrylate/methyl methacrylate/ethyl acrylate/acrylic acid copolymer (30/55/10/5), a benzyl methacrylate/isobutyl methacrylate/methacrylic acid copolymer (35/59/6), a styrene/phenoxyethyl acrylate/methyl methacrylate/acrylic acid copolymer (10/50/35/5), a benzyl acrylate/methyl methacrylate/acrylic acid copolymer (55/40/5), a phenoxyethyl methacrylate/benzyl acrylate/methacrylic acid copolymer (45/47/8), a styrene/phenoxyethyl acrylate/butyl methacrylate/acrylic acid copolymer (5/48/40/7), a benzyl methacrylate/isobutyl methacrylate/cyclohexyl methacrylate/methacrylic acid copolymer (35/30/30/5), a phenoxyethyl acrylate/methyl methacrylate/butyl acrylate/methacrylic acid copolymer (12/50/30/8), a benzyl acrylate/isobutyl methacrylate/acrylic acid copolymer (93/2/5), a methyl methacrylate/methoxyethyl acrylate/benzyl methacrylate/acrylic acid copolymer (44/15/35/6), a styrene/butyl acrylate/acrylic acid copolymer (62/35/3), a methyl methacrylate/phenoxyethyl acrylate/acrylic acid copolymer (45/51/4), a methyl methacrylate/isobornyl methacrylate/methacrylic acid copolymer (20/72/8), a methyl methacrylate/isobornyl methacrylate/methacrylic acid copolymer (40/52/8), a methyl methacrylate/isobornyl methacrylate/methacrylic acid copolymer (48/42/10), a methyl methacrylate/isobornyl methacrylate/dicyclopentanyl methacrylate/methacrylic acid copolymer (20/62/10/8), a methyl methacrylate/dicyclopentanyl methacrylate/methacrylic acid copolymer (20/72/8), and a methyl methacrylate/isobornyl methacrylate/methacrylic acid copolymer (70/20/10). In addition, the values in parentheses represent the mass ratios of the structural units derived from monomers. Further, the (meth)acrylic acid constituting the resin may be partially or entirely a salt.

The acid value of the resin in the resin particles is preferably 25 mgKOH/g to 100 mgKOH/g, more preferably 30 mgKOH/g to 90 mgKOH/g, and still more preferably 35 mgKOH/g to 80 mgKOH/g.

The weight-average molecular weight of the resin in the resin particles is preferably in a range of 1,000 to 300,000, more preferably in a range of 2,000 to 200,000, and still more preferably in a range of 5,000 to 100,000.

From the viewpoint of the jetting stability, the average particle diameter of the resin particles is preferably in a range of 1 nm to 200 nm, more preferably in a range of 3 nm to 200 nm, and still more preferably in a range of 5 nm to 50 nm. Further, the average particle diameter of the resin particles is acquired by measuring the volume average particle diameter using a particle size distribution measuring device, for example, "NANOTRAC UPA-EX150" (product name, manufactured by Nikkiso Co., Ltd.) according to a dynamic light scattering method.

In a case where the white ink contains resin particles, the content of the resin particles is preferably in a range of 0.1% by mass to 15% by mass, more preferably in a range of 0.5% by mass to 10% by mass, still more preferably in a range of 1% by mass to 8% by mass, and even still more preferably in a range of 2% by mass to 5% by mass with respect to the total amount of the white ink.

### (Additive)

The white ink prepared in the white ink preparation step may contain additives such as a surfactant, a co-sensitizer, an ultraviolet absorbing agent, an antioxidant, a fading inhibitor, a conductive salt, and a basic compound, as necessary.

### (Physical properties)

From the viewpoint of improving the jetting stability, the pH of the white ink is preferably in a range of 7 to 10 and more preferably in a range of 7.5 to 9.5. The pH is measured at 25°C using a pH meter, for example, a pH meter (model number "HM-31", manufactured by DKK-Toa Corporation).

The viscosity of the white ink is preferably in a range of 0.5 mPa·s to 30 mPa·s, more preferably in a range of 2 mPa s to 20 mPa s, preferably in a range of 2 mPa s to 15 mPa s, and even still more preferably in a range of 3 mPa·s to 10 mPa·s. The viscosity is measured at 25°C using a viscometer, for example, a TV-22 type viscometer (manufactured by Toki Sangyo Co., Ltd.).

The surface tension of the white ink is preferably 60 mN/m or less, more preferably in a range of 20 mN/m to 50 mN/m, and still more preferably in a range of 30 mN/m to 45 mN/m. The surface tension is measured at 25°C by a plate method using a surface tension meter, for example, an automatic surface tension meter (product name, "CBVP-Z", manufactured by Kyowa Interface Science Co., Ltd.).

### <Colored ink preparation step>

The image recording method of the present disclosure includes a step of preparing a colored ink that contains a colored pigment other than the white pigment, a second organic solvent having a boiling point of 120°C or higher, and water (hereinafter, referred to as "colored ink preparation step").

The colored ink prepared in the colored ink preparation step may be used alone or in combination of two or more kinds thereof. In order to record a multicolor image, it is preferable that the colored ink prepared in the colored ink preparation step is used in combination of two or more kinds thereof. That is, it is preferable that the image recording method of the present disclosure includes a step of preparing at least two kinds of colored inks containing a colored pigment other than the white pigment, a second organic solvent having a boiling point of 120°C or higher, and water.

### (Colored pigment)

The colored ink prepared in the colored ink preparation step contains a colored pigment other than the white pigment. Hereinafter, the colored pigment other than the white pigment will be simply referred to as "colored pigment".

The colored pigment contained in the colored ink may be a chromatic pigment, a black pigment, or a combination of one or more kinds of chromatic pigments and one or more kinds of black pigments.

The chromatic pigment may be a pigment exhibiting a chromatic color, and the kind thereof is not particularly limited. The chromatic color denotes a color with a tint.

The chromatic pigment is not particularly limited, and examples thereof include a cyan pigment, a magenta pigment, a yellow pigment, a blue pigment, a red pigment, a green pigment, an orange pigment, and a violet pigment.

Specific examples of the chromatic pigment include organic pigments such as an azo pigment, a disazo pigment, a condensed disazo pigment, a phthalocyanine pigment, a quinacridone pigment, a quinacridone quinone pigment, an anthraquinone pigment, an aminoanthraquinone pigment, an anthanthrone pigment, a dioxazine pigment, an indigo pigment, a thioindigo pigment, a perinone pigment, a perylene pigment, an isoindoline pigment, an isoindolinone pigment, an isoviolanthrone pigment, a benzimidazolone pigment, an indanthrone pigment, a triarylcarbonium pigment, and a diketopyrrolopyrrole pigment.

More specific examples of the chromatic pigment include a perylene pigment such as C.I. Pigment Red 190, C.I. Pigment Red 224, or C.I. Pigment Violet 29; a perinone pigment such as C.I. Pigment Orange 43 or C.I. Pigment Red 194; a quinacridone pigment such as C.I. Pigment Violet 19, C.I. Pigment Violet 42, C.I. Pigment Red 122, C.I. Pigment Red 192, C.I. Pigment Red 202, C.I. Pigment Red 207, or Pigment Red 209; a quinacridone quinone pigment such as C.I. Pigment Red 206, C.I. Pigment Orange 48, or C.I. Pigment Orange 49; an anthraquinone pigment such as C.I. Pigment Yellow 147; an anthanthrone pigment such as C.I. Pigment Red 168; a benzimidazolone pigment such as C.I. Pigment Brown 25, C.I. Pigment Violet 32, C.I. Pigment Orange 36, C.I. Pigment Yellow 120, C.I. Pigment Yellow 180, C.I. Pigment Yellow 181, C.I. Pigment Orange 62, or C.I. Pigment Red 185; a condensed disazo pigment such as C.I. Pigment Yellow 93, C.I. Pigment Yellow 94, C.I. Pigment Yellow 95, C.I. Pigment Yellow 128, C.I. Pigment Yellow 166, C.I. Pigment Orange 34, C.I. Pigment Orange 13, C.I. Pigment Orange 31, C.I. Pigment Red 144, C.I. Pigment Red 166, C.I. Pigment Red 220, C.I. Pigment Red 221, C.I. Pigment Red 242, Pigment Red 248, C.I. Pigment Red 262, or C.I. Pigment Brown 23; a disazo pigment such as C.I. Pigment Yellow 13, C.I. Pigment Yellow 83, or C.I. Pigment Yellow 188; an azo pigment such as C.I. Pigment Red 187, C.I. Pigment Red 170, C.I. Pigment Yellow 74, C.I. Pigment Yellow 150, C.I. Pigment Red 48, C.I. Pigment Red 53, C.I. Pigment Orange 64, or C.I. Pigment Red 247; an indanthrone pigment such as C.I. Pigment Blue 60; a phthalocyanine pigment such as C.I. Pigment Green 7, C.I. Pigment Green 36, C.I. Pigment Green 37, C.I. Pigment Green 58, C.I. Pigment Blue 16, C.I. Pigment Blue 75, or C.I. Pigment Blue 15; a triarylcarbonium pigment such as C.I. Pigment Blue 56 or C.I. Pigment Blue 61; a dioxazine pigment such as C.I. Pigment Violet 23 or C.I. Pigment Violet 37; an aminoanthraquinone pigment such as C.I. Pigment Red 177; a diketopyrrolopyrrole pigment such as C.I. Pigment Red 254, C.I. Pigment Red 255, C.I. Pigment Red 264, C.I. Pigment Red 272, C.I. Pigment Orange 71, or C.I. Pigment Orange 73; a thioindigo pigment such as C.I. Pigment Red 88; an isoindoline pigment such as C.I. Pigment Yellow 139 or Pigment Orange 66; an isoindolinone pigment such as Pigment Yellow 109 or C.I. Pigment Orange 61; a pyranthrone pigment such as C.I. Pigment Orange 40 or C.I. Pigment Red 216; and an isoviolanthrone pigment such as C.I. Pigment Violet 31.

The black pigment may be a pigment exhibiting a black color, and the kind thereof is not particularly limited. Examples of the black pigment include carbon black and titanium black.

The average particle diameter of the colored pigment is preferably in a range of 10 nm to 200 nm, more preferably in a range of 10 nm to 150 nm, and still more preferably in a range of 10 nm to 110 nm. The color reproducibility is enhanced in a case where the average particle diameter is 200 nm or less, and the jetting stability is enhanced in a case where an image is recorded using an inkjet recording method. Further, the light resistance is enhanced in a case where the average particle diameter is 10 nm or greater. In addition, the particle size distribution of the pigment may be any of a wide particle size distribution or a monodispersed particle size distribution. Further, the average particle diameter and the particle size distribution of the pigment are acquired by measuring the volume average particle diameter using a particle size distribution measuring device, for example, "NANOTRAC UPA-EX150" (product name, manufactured by Nikkiso Co., Ltd.) according to a dynamic light scattering method. Further, in a case where the pigment is coated with the pigment dispersant, the average particle diameter of the pigment denotes the average particle diameter of the pigment coated with the pigment dispersant.

From the viewpoints of the image density, the j ettability, and the re-j ettability, the content of the colored pigment is preferably in a range of 1% by mass to 15% by mass and more preferably in a range of 2% by mass to 10% by mass with respect to the total amount of the colored ink.

### (Second organic solvent having boiling point 120°C or higher)

The colored ink prepared in the colored ink preparation step contains a second organic solvent having a boiling point of 120°C or higher. Hereinafter, the organic solvent having a boiling point of 120°C or higher, which is contained in the colored ink, will also be simply referred to as "second organic solvent".

Examples of the organic solvent having a boiling point of 120°C or higher include the above-described organic solvents having a boiling point of 120°C or higher which are contained in the white ink.

In a case where the colored ink contains the second organic solvent, the jettability and the re-j ettability are excellent. The colored ink may contain an organic solvent having a boiling point of lower than 120°C. From the viewpoints of the jettability and the re-jettability, the proportion of the second organic solvent in the organic solvent contained in the colored ink is preferably 50% by mass or greater, more preferably 80% by mass or greater, and still more preferably 90% by mass or greater. The proportion thereof may be 100% by mass. That is, all the organic solvents contained in the colored ink may be the second organic solvent.

Further, the content of the second organic solvent in the colored ink is preferably 30% by mass or less and more preferably 26% by mass or less with respect to the total amount of the colored ink. In a case where the content of the second organic solvent is 30% by mass or less, the image intensity is ensured and the adhesiveness between the image and the base material for lamination is improved even in the overlapping region. As a result, the lamination strength is excellent.

The lower limit of the content of the second organic solvent is not particularly limited as long as the lower limit thereof is greater than 0% by mass, but from the viewpoints of the jettability and the covering property, the content of the second organic solvent is preferably 10% by mass or greater, more preferably 15% by mass or greater, and still more preferably 20% by mass or greater with respect to the total amount of the colored ink.

Particularly from the viewpoint of further improving the lamination strength, the content of the organic solvent having a boiling point of 120°C or higher in both the white ink and the colored ink is preferably 30% by mass or less with respect to the total mass of each ink. That is, it is preferable that the content of the first organic solvent is 30% by mass or less with respect to the total mass of the white ink and that the content of the second organic solvent is 30% by mass or less with respect to the total mass of the colored ink. The lower limit thereof is not particularly limited and is, for example, 5% by mass or greater.

From the viewpoint of further improving the lamination strength, it is particularly preferable that the colored ink contains an organic solvent having a boiling point of 120°C to 200°C (hereinafter, also referred to as "second organic solvent A"). The proportion of the second organic solvent A in the organic solvent contained in the colored ink is preferably 50% by mass or greater, more preferably 90% by mass or greater, and still more preferably 95% by mass or greater. The proportion thereof may be 100% by mass. That is, all the organic solvents contained in the colored ink may be the second organic solvent A.

It is preferable that the second organic solvent A includes at least one selected from the group consisting of alkylene glycol and alkylene glycol alkyl ether. Further, it is more preferable that the second organic solvent A includes at least one kind of alkylene glycol and at least one kind of alkylene glycol alkyl ether. Further, it is still more preferable that the second organic solvent A includes at least one kind of alkylene glycol and at least two kinds of alkylene glycol alkyl ethers.

It is preferable that the alkylene glycol and the alkylene glycol alkyl ether of the second organic solvent A are selected from the group consisting of propylene glycol monomethyl ether, propylene glycol monoethyl ether, propylene glycol monopropyl ether, propylene glycol monobutyl ether, ethylene glycol monopropyl ether, ethylene glycol monobutyl ether, propylene glycol, dipropylene glycol monomethyl ether, diethylene glycol monoethyl ether, and ethylene glycol.

In a case where the colored ink contains an organic solvent including at least one kind of alkylene glycol having a boiling point of 120°C to 200°C and at least one kind of alkylene glycol alkyl ether having a boiling point of 120°C to 200°C, the drying properties of the colored ink on the base material are improved. In this manner, the lamination strength and the adhesiveness are improved.

Further, in a case where the colored ink contains an organic solvent including at least one kind of alkylene glycol having a boiling point of 120°C to 200°C and at least two kinds of alkylene glycol alkyl ethers having a boiling point of 120°C to 200°C, the drying properties of the colored ink on the base material are improved, and the suitability for lamination and the adhesiveness are enhanced.

In a case where the colored ink contains alkylene glycol alkyl ether and alkylene glycol alkyl ether, the mass ratio of the content of the alkylene glycol to the content of the alkylene glycol alkyl ether ("content of alkylene glycol"/"content of alkylene glycol alkyl ether") is preferably 20.0 or less, more preferably 18.0 or less, still more preferably 15.0 or less, even still more preferably 10.0 or less, particularly preferably 8.0 or less, and more particularly preferably 6.0 or less from the viewpoint of further improving the lamination strength and the adhesiveness. The lower limit of the mass ratio is not particularly limited, but is preferably 1.0, more preferably 2.0, still more preferably 3.0, and even still more preferably 4.0 from the viewpoint of re-jettability.

The colored ink may contain an organic solvent having a boiling point of higher than 200°C and 240°C or lower (hereinafter, referred to as "second organic solvent B") or an organic solvent having a boiling point of higher than 240°C (hereinafter, referred to as "second organic solvent C") in addition to the second organic solvent A.

From the viewpoint of further improving the lamination strength and the adhesiveness of the image recorded material, the total proportion of the second organic solvent A and the second organic solvent B in the organic solvent contained in the colored ink is preferably 90% by mass or greater and preferably 95% by mass or greater. The proportion thereof may be 100% by mass. That is, all the organic solvents contained in the colored ink may be organic solvents consisting of the second organic solvent A and the second organic solvent B, or the second organic solvent B.

Examples of the first organic solvent B include diethylene glycol monobutyl ether, dipropylene glycol, and 1,2-hexanediol.

From the viewpoint of further improving the lamination strength and the adhesiveness of the image recorded material, the proportion of the second organic solvent C in the organic solvent contained in the colored ink is preferably 10% by mass or less. The proportion thereof may be 0% by mass. That is, the colored ink may not contain the second organic solvent C.

Examples of the second organic solvent C include diethylene glycol and triethylene glycol.

The weighted average value of the SP values of the organic solvents contained in the colored ink is preferably 28 MPa^{1/2} or less. In particular, the weighted average value of SP values of the organic solvents contained in each of the white ink and the colored ink is preferably 28 MPa^{1/2} or less.

The weighted average value of the SP values of the organic solvents contained in the colored ink is calculated by the same method as that for the weighted average value of the SP values of the organic solvents contained in the white ink.

In a case where the weighted average value of the SP values of the organic solvents contained in the colored ink is 28 MPa^{1/2} or less, the lamination strength of the image recorded material is improved. From the viewpoint of the lamination strength, the weighted average value described above is more preferably 27 MPa^{1/2} or less. From the viewpoints of the jettability and the re-jettability, the lower limit of the weighted average value described above is preferably 25.5 MPa^{1/2}.

### (Water)

The colored ink prepared in the colored ink preparation step contains water. The content of water is not particularly limited and is, for example, in a range of 40% by mass to 70% by mass.

### (Pigment dispersant)

It is preferable that the colored ink prepared in the colored ink preparation step contains a pigment dispersant in order to disperse the colored pigment in water. Further, in a case where a self-dispersing pigment that can be dispersed in water even in the absence of a pigment dispersant is used as the colored pigment, the colored ink may not contain a pigment dispersant.

The form of the pigment dispersant contained in the colored ink is not particularly limited and may be any of a random polymer, a block polymer, or a graft polymer. Further, the pigment dispersant contained in the colored ink may be a polymer having a crosslinked structure. Among the forms, it is preferable that the pigment dispersant contained in the colored ink is a polymer having a crosslinked structure. It is considered that in a case where the pigment dispersant is a polymer having a crosslinked structure, the pigment dispersant is unlikely to be released from the surface of the colored pigment. As a result, the dispersion stability of the colored pigment is high. Since the organic solvent is likely to volatilize after the colored ink has landed on the impermeable base material, the lamination strength is further improved.

In a case where the pigment dispersant contained in the colored ink is a polymer having a crosslinked structure, the preferable aspects of the polymer having a crosslinked structure are the same as the preferable aspects in a case where the pigment dispersant contained in the white ink is a polymer having a crosslinked structure.

The mixing ratio between the colored pigment and the pigment dispersant is preferably in a range of 1:0.06 to 1:3, more preferably in a range of 1:0.125 to 1:2, and still more preferably in a range of 1:0.125 to 1:1.5 in terms of the mass.

### (Resin particles)

From the viewpoint of improving the lamination strength of the image recorded material, it is preferable that the colored ink prepared in the colored ink preparation step contains at least one kind of resin particles. It is preferable that the colored ink contains resin particles which are particles formed of a resin, in addition to the pigment dispersant.

The preferable aspects of the resin particles contained in the colored ink are the same as the preferable aspects of the resin particles contained in the white ink.

In a case where the colored ink contains resin particles, the content of the resin particles is preferably in a range of 0.1% by mass to 15% by mass, more preferably in a range of 0.5% by mass to 10% by mass, still more preferably in a range of 1% by mass to 8% by mass, and even still more preferably in a range of 2% by mass to 6% by mass with respect to the total mass of the colored ink.

### (Additive)

The colored ink prepared in the colored ink preparation step may contain additives such as a surfactant, a co-sensitizer, an ultraviolet absorbing agent, an antioxidant, a fading inhibitor, a conductive salt, and a basic compound, as necessary.

### (Physical properties)

From the viewpoint of improving the jetting stability, the pH of the colored ink is preferably in a range of 7 to 10 and more preferably in a range of 7.5 to 9.5. The pH is measured at 25°C using a pH meter, for example, a pH meter (model number "HM-31", manufactured by DKK-Toa Corporation).

The viscosity of the colored ink is preferably in a range of 0.5 mPa s to 30 mPa·s, more preferably in a range of 2 mPa s to 20 mPa s, preferably in a range of 2 mPa s to 15 mPa s, and even still more preferably in a range of 3 mPa·s to 10 mPa·s. The viscosity is measured at 25°C using a viscometer, for example, a TV-22 type viscometer (manufactured by Toki Sangyo Co., Ltd.).

The surface tension of the colored ink is preferably 60 mN/m or less, more preferably in a range of 20 mN/m to 50 mN/m, and still more preferably in a range of 30 mN/m to 45 mN/m. The surface tension is measured at 25°C by a plate method using a surface tension meter, for example, an automatic surface tension meter (product name, "CBVP-Z", manufactured by Kyowa Interface Science Co., Ltd.).

### <Image recording step>

The image recording method of the present disclosure includes a step of recording an image by applying each of the white ink and the colored ink onto an impermeable base material (hereinafter, also referred to as "image recording step"). In a region where a region to which the white ink is applied and a region to which the colored ink is applied overlap each other in plan view, an image is recorded in the image recording step under conditions that the total mass of the first organic solvent and the second organic solvent to be applied per unit area is 5.5 g/m² or less, and the mass of the white pigment to be applied per unit area is 0.4 g/m² or greater.

### (Impermeable base material)

In the present disclosure, the impermeability in the impermeable base material denotes a property that the water absorption rate in 24 hours which is measured in conformity with ASTM D570-98 (2018) is 2.5% or less. Here, the unit "%" of the water absorption rate is on a mass basis. The water absorption rate is preferably 1.0% or less and more preferably 0.5% or less.

Examples of the material of the impermeable base material include glass, a metal (such as aluminum, zinc, or copper), and a resin (such as polyvinyl chloride, cellulose diacetate, cellulose triacetate, cellulose propionate, cellulose butyrate, cellulose acetate butyrate, cellulose nitrate, polyethylene terephthalate, polyethylene, polystyrene, polypropylene, polycarbonate, polyvinyl acetal, nylon, or an acrylic resin).

It is preferable that the material of the impermeable base material is a resin.

Examples of the material of the impermeable base material are as described above, but polypropylene, polyethylene, polyethylene terephthalate, nylon, an acrylic resin, or polyvinyl chloride is preferable from the viewpoint of versatility.

As the shape of the impermeable base material, a sheet-like (film-like) or a plate-like impermeable base material is preferable. Examples of the impermeable base material having such a shape include a glass plate, a metal plate, a resin sheet (resin film), paper on which plastic is laminated, paper on which a metal is laminated or vapor-deposited, and a plastic sheet (plastic film) on which a metal is laminated or vapor-deposited.

Examples of the impermeable base material made of a resin include a resin sheet (resin film), and more specific examples thereof include a flexible packaging material for packaging food or the like and a panel for guiding the floor of a mass retailer.

Examples of the impermeable base material include a textile (woven fabric) or nonwoven fabric formed of impermeable fibers in addition to a sheet-like (film-like) or plate-like impermeable base material.

Further, the thickness of the impermeable base material is preferably in a range of 0.1 µm to 1,000 µm, more preferably in a range of 0.1 µm to 800 µm, and still more preferably in a range of 1 µm to 500 µm.

The impermeable base material may be subjected to a hydrophilization treatment. Examples of the hydrophilization treatment include a corona treatment, a plasma treatment, a flame treatment, a heat treatment, an abrasion treatment, a light irradiation treatment (such as a UV treatment), and a fire treatment, but the hydrophilization treatment is not limited thereto. The corona treatment can be performed using, for example, Corona Master (product name, "PS-10S", manufactured by Shinko Electric & Instrumentation Co., Ltd.). The conditions for the corona treatment may be appropriately selected according to the kind of the impermeable base material and the like.

The impermeable base material may be heated before the application of the white ink and the colored ink. The heating temperature may be appropriately set according to the kind of the impermeable base material, but the temperature of the impermeable base material is set to be preferably in a range of 30°C to 70°C and more preferably in a range of 30°C to 60°C.

### (Order of applying white ink and colored ink)

In the image recording step, each of the white ink and the colored ink is applied onto the impermeable base material. The order of applying the white ink and the colored ink is not particularly limited, and the white ink may be applied after the colored ink is applied onto the impermeable base material or the colored ink may be applied after the white ink is applied onto the impermeable base material. In a case where the impermeable base material is transparent and is used for reverse printing, it is preferable that the white ink is applied onto the impermeable base material after the colored ink is applied thereto. That is, it is preferable that the image recording method of the present disclosure includes a step of applying the colored ink onto the impermeable base material and a step of applying the white ink onto the colored ink film formed by applying the colored ink.

### (Conditions for applying white ink and colored ink)

In the image recording step, an image is recorded by applying each of the white ink and the colored ink under a condition that a region where a region to which the white ink is applied and a region to which the colored ink is applied overlap each other in plan view (hereinafter, referred to as "overlapping region") is generated.

In the image recording step, each of the white ink and the colored ink may be applied under a condition that the overlapping region and a region other than the overlapping region are generated.

For example, the colored ink may be applied in a pattern onto the impermeable base material to form a patterned colored ink film, and the white ink may be applied (for example, in a solid) onto a region straddling the colored ink film and a region other than the colored ink film (for example, a region covering the colored ink film and the entire peripheral area) to form a white ink film. In this case, the region where the colored ink film is present corresponds to "overlapping region" described above, and the region where the white ink film is present without the presence of the colored ink film and the region where the colored ink film and the white ink film are not present correspond to "region other than the overlapping region" described above.

### (Mass of white ink and colored ink to be applied)

An image is recorded in the image recording step under conditions that the total mass of the first organic solvent and the second organic solvent to be applied per unit area is 5.5 g/m² or less and the mass of the white pigment to be applied per unit area in the overlapping region is 0.4 g/m² or greater.

In a case where the total mass of the first organic solvent and the second organic solvent to be applied per unit area in the overlapping region is 5.5 g/m² or less, the image intensity is ensured, and the adhesiveness between the image and the base material for lamination is improved in a case where the white ink and the colored ink are applied onto the impermeable base material. As a result, the lamination strength is excellent.

In a case where the mass of the white pigment to be applied per unit area in the overlapping region is 0.4 g/m² or greater, since the white pigment holds the peripheral organic solvent, the image intensity is ensured, and the adhesiveness between the image and the base material for lamination is improved. As a result, the lamination strength is excellent. Further, in a case where the mass of the white pigment to be applied per unit area in the overlapping region is 0.4 g/m² or greater, the covering property is excellent.

The mass (in units of g/m²) of the first organic solvent to be applied per unit area in the overlapping region is calculated by the product of the mass of the white ink to be applied per unit area in the overlapping region and the content (% by mass) of the first organic solvent with respect to the total amount of the white ink.

The mass (in units of g/m²) of the second organic solvent to be applied per unit area in the overlapping region is calculated by the product of the mass of the colored ink to be applied per unit area in the overlapping region and the content (% by mass) of the second organic solvent with respect to the total amount of the colored ink.

The mass (in units of g/m²) of the white pigment to be applied per unit area in the overlapping region is calculated by the product of the mass of the white ink to be applied per unit area in the overlapping region and the content (% by mass) of the white pigment with respect to the total amount of the white ink.

The mass of the white ink to be applied per unit area and the mass (in units of g/m²) of the colored ink to be applied per unit area in the overlapping region are respectively calculated based on the resolution, the image halftone dot rate, and the droplet weight per drop.

From the viewpoint of further improving the lamination strength, the total mass of the first organic solvent and the second organic solvent to be applied per unit area in the overlapping region is preferably 5.5 g/m² or less, more preferably 5.0 g/m² or less, and still more preferably 4.5 g/m² or less. From the viewpoint of the covering ratio, the lower limit of the total mass thereof to be applied is preferably 3.0 g/m².

From the viewpoint of further improving the lamination strength and the covering property, the mass of the white pigment to be applied per unit area in the overlapping region is preferably 0.8 g/m² or greater and more preferably 1.0 g/m² or greater. The upper limit of the mass thereof to be applied is preferably 1.2 g/m² from the viewpoints of the jettability and the re-j ettability.

### (Method of applying white ink)

A method of applying the white ink is not particularly limited, and examples thereof include known methods such as a coating method, a dipping method, and an ink jet recording method. Among these, from the viewpoint that a high-definition image can be recorded, it is preferable that the white ink is applied by an inkjet recording method.

The method of jetting the ink in the ink jet recording method is not particularly limited, and any of known methods such as an electric charge control method of jetting an ink using an electrostatic attraction force, a drop-on-demand method (pressure pulse method) using a vibration pressure of a piezoelectric element, an acoustic ink jet method of jetting an ink using a radiation pressure by converting an electric signal into an acoustic beam and irradiating the ink with the acoustic beam, and a thermal inkjet (bubble jet (registered trademark)) method of heating an ink to form air bubbles and using the generated pressure may be used.

As the inkjet recording method, particularly, an inkjet recording method, described in JP1979-59936A (JP-S54-59936A), of jetting an ink from a nozzle using an action force caused by a rapid change in volume of the ink after being subjected to an action of thermal energy can be effectively used. Further, as the ink jet recording method, the method described in paragraphs 0093 to 0105 of JP2003-306623A can also be employed.

The application of the ink onto the impermeable base material using the inkjet recording method can be performed by allowing the ink to be jetted from a nozzle of an ink jet head.

Examples of the system of the ink jet head include a shuttle system of performing recording while scanning a short serial head in the width direction of a recorded medium and a line system of using a line head in which recording elements are aligned in correspondence with the entire area of one side of a recorded medium.

In the line system, image recording can be performed on the entire surface of the recorded medium by scanning the recorded medium in a direction intersecting the direction in which the recording elements are aligned. In the line system, a transport system such as a carriage that scans a short head in the shuttle system is not necessary. Further, in the line system, since movement of a carriage and complicated scanning control between the short head and the recorded medium are not necessary as compared with the shuttle system, only the recorded medium moves. Therefore, according to the line system, image recording at a higher speed than that of the shuttle system can be realized.

It is preferable that the application of the ink is performed using an inkjet head having a resolution of 300 dpi or greater (more preferably 600 dpi or greater and still more preferably 800 dpi or greater). Here, dpi stands for dot per inch, and 1 inch is 2.54 cm.

From the viewpoint of obtaining a high-definition image, the liquid droplet amount of the ink to be jetted from the nozzle of the inkjet head is preferably in a range of 1 pico liter (pL) to 10 pL and more preferably in a range of 1.5 pL to 6 pL. Further, from the viewpoints of improving the image unevenness and improving connection of continuous gradations, it is also effective that the ink is jetted by combining different liquid droplet amounts.

### (Method of applying colored ink)

A method of applying the colored ink is not particularly limited, and examples thereof include known methods such as a coating method, a dipping method, and an ink jet recording method. Among these, from the viewpoint that a high-definition image can be recorded, it is preferable that the colored ink is applied by an ink jet recording method. The details of the ink jet recording method are the same as the details of the ink jet recording method in the method of applying the white ink.

### <Pretreatment liquid preparation step>

The image recording method of the present disclosure further includes a step of preparing a pretreatment liquid containing an aggregating agent and water (hereinafter, referred to as "pretreatment liquid preparation step"), and it is preferable that each of the white ink and the colored ink is applied after application of the pretreatment liquid onto the impermeable base material to record an image in the image recording step.

The components in the white ink and the colored ink are aggregated by the aggregating agent contained in the pretreatment liquid by applying the pretreatment liquid onto the impermeable base material in advance. Particularly, in a case where the white ink and the colored ink contain a pigment dispersant and resin particles, the aggregation effect due to the aggregating agent is high. The adhesiveness of the impermeable base material to the white ink film and the colored ink film is improved, and the lamination strength is further improved.

### (Aggregating agent)

It is preferable that the pretreatment liquid prepared in the pretreatment liquid preparation step contains an aggregating agent. The aggregating agent is not particularly limited as long as the aggregating agent is a component that aggregates the components in the white ink and the colored ink. The aggregating agent contains preferably at least one selected from the group consisting of a polyvalent metal compound, an organic acid, a metal complex, and a cationic polymer and more preferably an organic acid.

### - Polyvalent metal compound -

Examples of the polyvalent metal compound include salts of alkaline earth metals of a group 2 (such as magnesium and calcium) in the periodic table, transition metals of a group 3 (such as lanthanum) in the periodic table, metals of a group 13 (such as aluminum) in the periodic table, and lanthanides (such as neodymium).

As salts of these metals, salts of organic acids, a nitrate, a chloride, and a thiocyanate described below are preferable.

Among these, preferred examples of the polyvalent metal compound include a calcium salt or magnesium salt of an organic acid (such as formic acid, acetic acid, or a benzoic acid), a calcium salt or magnesium salt of nitric acid, calcium chloride, magnesium chloride, and a calcium salt or magnesium salt of thiocyanic acid.

Further, it is preferable that at least a part of the polyvalent metal compound is dissociated into polyvalent metal ions and counterions in the pretreatment liquid.

### - Organic acid -

As the organic acid, an organic compound containing an acidic group is exemplified.

Examples of the acidic group include a phosphoric acid group, a phosphonic acid group, a phosphinic acid group, a sulfuric acid group, a sulfonic acid group, a sulfinic acid group, and a carboxy group.

Among these, from the viewpoint of the aggregation rate of the ink, a phosphoric acid group or a carboxy group is preferable, and a carboxy group is more preferable as the acidic group.

Further, it is preferable that at least a part of the acidic group is dissociated in the pretreatment liquid.

Examples of the organic compound containing a carboxy group include (meth)acrylic acid, poly(meth)acrylic acid, acetic acid, formic acid, benzoic acid, glycolic acid, malonic acid, malic acid (preferably DL-malic acid), maleic acid, succinic acid, glutaric acid, pimelic acid, adipic acid, fumaric acid, citric acid, tartaric acid, phthalic acid, 4-methylphthalic acid, lactic acid, pyrrolidone carboxylic acid, pyrone carboxylic acid, pyrrole carboxylic acid, furan carboxylic acid, pyridine carboxylic acid, coumaric acid, thiophene carboxylic acid, and nicotinic acid.

Among these, from the viewpoint of the aggregation rate of the ink, as the organic compound containing a carboxy group, di- or higher valent carboxylic acid (hereinafter, also referred to as polyvalent carboxylic acid) is preferable, and dicarboxylic acid is more preferable.

Specifically, as the polyvalent carboxylic acid, malonic acid, malic acid, maleic acid, succinic acid, glutaric acid, pimelic acid, adipic acid, fumaric acid, tartaric acid, 4-methylphthalic acid, or citric acid is preferable, and malonic acid, malic acid, tartaric acid, succinic acid, glutaric acid, pimelic acid, adipic acid, or citric acid is more preferable.

It is preferable that the organic acid has a low pKa (for example, 1.0 to 5.0). In this manner, the surface charge of particles such as resin particles or the pigment stably dispersed in the ink by a weakly acidic functional group such as a carboxy group can be reduced by bringing the ink into contact with an organic acid having a lower pKa to degrade the dispersion stability.

It is preferable that the organic acid has a low pKa, high solubility in water, and a valence of divalent or higher. Further, it is more preferable that the organic acid has a high buffer capacity in a pH region with a pKa lower than the pKa of a functional group (for example, a carboxy group) that stably disperses particles in the ink.

### - Metal complex -

It is preferable that the metal complex contains at least one selected from the group consisting of zirconium, aluminum, and titanium as a metal element.

As the metal complex, a metal complex including at least one selected from the group consisting of acetate, acetylacetonate, methyl acetoacetate, ethylacetoacetate, octylene glycolate, butoxy acetyl acetonate, lactate, a lactate ammonium salt, and triethanol aminate as a ligand is preferable.

The metal complex may be a commercially available product. Further, various organic ligands, particularly various multidentate ligands that are capable of forming metal chelate catalysts are commercially available. Accordingly, the metal complex may be a metal complex prepared by combining a commercially available organic ligand with a metal.

Examples of the metal complex include zirconium tetraacetyl acetonate (for example, "ORGATIX ZC-150", manufactured by Matsumoto Fine Chemical Co., Ltd.), zirconium monoacetyl acetonate (for example, "ORGATIX ZC-540", manufactured by Matsumoto Fine Chemical Co., Ltd.), zirconium bisacetyl acetonate (for example, "ORGATIX ZC-550", manufactured by Matsumoto Fine Chemical Co., Ltd.), zirconium monoethyl acetoacetate (for example, "ORGATIX ZC-560", manufactured by Matsumoto Fine Chemical Co., Ltd.), zirconium acetate (for example, "ORGATIX ZC-115", manufactured by Matsumoto Fine Chemical Co., Ltd.), titanium diisopropoxy bis(acetylacetonate) (for example, "ORGATIX TC-100", manufactured by Matsumoto Fine Chemical Co., Ltd.), titanium tetraacetyl acetonate (for example, "ORGATIX TC-401", manufactured by Matsumoto Fine Chemical Co., Ltd.), titanium dioctyloxy bis(octylene glycolate) (for example, "ORGATIX TC-200", manufactured by Matsumoto Fine Chemical Co., Ltd.), titanium diisopropoxy bis(ethylacetoacetate) (for example, "ORGATIX TC-750", manufactured by Matsumoto Fine Chemical Co., Ltd.), zirconium tetraacetyl acetonate (for example, "ORGATIX ZC-700", manufactured by Matsumoto Fine Chemical Co., Ltd.), zirconium tributoxy monoacetyl acetonate (for example, "ORGATIX ZC-540", manufactured by Matsumoto Fine Chemical Co., Ltd.), zirconium monobutoxy acetyl acetonate bis(ethylacetoacetate) (for example, "ORGATIX ZC-570", manufactured by Matsumoto Fine Chemical Co., Ltd.), zirconium dibutoxy bis(ethylacetoacetate) (for example, "ORGATIX ZC-580", manufactured by Matsumoto Fine Chemical Co., Ltd.), aluminum trisacetyl acetonate (for example, "ORGATIX AL-80", manufactured by Matsumoto Fine Chemical Co., Ltd.), titanium lactate ammonium salt (for example, "ORGATIX TC-300", manufactured by Matsumoto Fine Chemical Co., Ltd.), titanium lactate (for example, "ORGATIX TC-310, 315", manufactured by Matsumoto Fine Chemical Co., Ltd.), titanium triethanol aminate (for example, "ORGATIX TC-400", manufactured by Matsumoto Fine Chemical Co., Ltd.), and a zirconyl chloride compound (for example, "ORGATIX ZC-126", manufactured by Matsumoto Fine Chemical Co., Ltd.).

Among these, titanium lactate ammonium salt (for example, "ORGATIX TC-300", manufactured by Matsumoto Fine Chemical Co., Ltd.), titanium lactate (for example, "ORGATIX TC-310, 315", manufactured by Matsumoto Fine Chemical Co., Ltd.), titanium triethanol aminate (for example, "ORGATIX TC-400", manufactured by Matsumoto Fine Chemical Co., Ltd.), and a zirconyl chloride compound (for example, "ORGATIX ZC-126", manufactured by Matsumoto Fine Chemical Co., Ltd.) are preferable as the metal complex.

### - Cationic polymer -

In addition, the pretreatment liquid may be in a form containing one or two or more kinds of cationic polymers as an aggregating component. It is preferable that the cationic polymer is a homopolymer of a cationic monomer containing a primary to tertiary amino group or a quaternary ammonium base, or a copolymer or a condensed polymer of a cationic monomer and a non-cationic monomer. The cationic polymer may be used in any form of a water-soluble polymer or water-dispersible latex particles.

Examples of the cationic polymer include a polyvinylpyridine salt, polyalkylaminoethyl acrylate, polyalkylaminoethyl methacrylate, polyvinylimidazole, polyethyleneimine, polybiguanide, polyguanide, polyallylamine, and derivatives thereof.

From the viewpoint of the viscosity of the pretreatment liquid, it is preferable that the weight-average molecular weight of the cationic polymer is small. In a case where the pretreatment liquid is applied to a recording medium by an inkjet recording method, the weight-average molecular weight thereof is preferably in a range of 1,000 to 500,000, more preferably in a range of 1,500 to 200,000, and still more preferably in a range of 2,000 to 100,000. It is advantageous that the weight-average molecular weight thereof is 1,000 or greater from the viewpoint of aggregation rate. It is advantageous that the weight-average molecular weight thereof is 500,000 or less from the viewpoint of jetting reliability. However, in a case where the pretreatment liquid is applied to a recording medium by a method other than the ink jet recording method, the weight-average molecular weight thereof is not limited thereto.

The pretreatment liquid may contain only one or two or more kinds of aggregating agents.

The content of the aggregating agent is preferably in a range of 0.1% by mass to 40% by mass, more preferably in a range of 0.1% by mass to 30% by mass, still more preferably in a range of 1% by mass to 20% by mass, and particularly preferably in a range of 1% by mass to 10% by mass with respect to the total amount of the pretreatment liquid.

### (Water)

It is preferable that the pretreatment liquid prepared in the pretreatment liquid preparation step contains water. The content of water is not particularly limited and is, for example, in a range of 40% by mass to 70% by mass.

### (Organic solvent)

The pretreatment liquid prepared in the pretreatment liquid preparation step may contain an organic solvent or a third organic solvent having a boiling point of 120°C or higher. Hereinafter, the organic solvent having a boiling point of 120°C or higher which is contained in the pretreatment liquid will also be simply referred to as "third organic solvent".

In a case where the pretreatment liquid contains a third organic solvent having a boiling point of 120°C or higher, the content of the third organic solvent is preferably 15% by mass or less and more preferably 5% by mass or less with respect to the total amount of the pretreatment liquid. The lower limit of the content of the third organic solvent is not particularly limited and may be 0% by mass. That is, the pretreatment liquid may not contain the third organic solvent. In a case where the content of the third organic solvent is 15% by mass or less, the image intensity is ensured and the adhesiveness between the image and the base material for lamination is improved even in the overlapping region. As a result, the lamination strength is improved.

Examples of the third organic solvent include propylene glycol and propylene glycol monomethyl ether.

### (Other components)

The pretreatment liquid may contain other components in addition to the aggregating agent and water as necessary. Examples of other components that may be contained in the pretreatment liquid include known additives such as resin particles, a surfactant, a solid wetting agent, colloidal silica, an inorganic salt, a fading inhibitor, an emulsification stabilizer, a penetration enhancer, an ultraviolet absorbing agent, a preservative, a fungicide, a pH adjuster, a viscosity adjuster, a rust inhibitor, a chelating agent, and a water-soluble polymer compound (for example, water-soluble polymer compounds described in paragraphs 0026 to 0080 of JP2013-001854A).

### (Physical properties)

The pH of the pretreatment liquid is preferably 0.1 to 4.5, more preferably 0.2 to 4.0, from the viewpoint of the aggregation rate of the ink. The pH is measured at 25°C using a pH meter, for example, a pH meter (model number "HM-31", manufactured by DKK-Toa Corporation).

From the viewpoint of the aggregation rate of the ink, the viscosity of the pretreatment liquid is preferably in a range of 0.5 mPa·s to 10 mPa·s and more preferably in a range of 1 mPa·s to 5 mPa·s. The viscosity is a value measured at 25°C using a viscometer. The viscosity is measured at 25°C using a viscometer, for example, a TV-22 type viscometer (manufactured by Toki Sangyo Co., Ltd.).

The surface tension of the pretreatment liquid is preferably 60 mN/m or less, more preferably in a range of 20 mN/m to 50 mN/m, and still more preferably in a range of 30 mN/m to 45 mN/m. The surface tension is a value measured at a temperature of 25°C. The surface tension is measured at 25°C by a plate method using a surface tension meter, for example, an automatic surface tension meter (product name, "CBVP-Z", manufactured by Kyowa Interface Science Co., Ltd.).

### (Order of applying pretreatment liquid, white ink, and colored ink)

In the image recording step, each of the white ink and the colored ink is applied after the application of the pretreatment liquid onto the impermeable base material. The order of applying the white ink and the colored ink is not particularly limited, and the white ink may be applied after the colored ink is applied onto the impermeable base material or the colored ink may be applied after the white ink is applied onto the impermeable base material. In a case where the impermeable base material is transparent and is used for reverse printing, it is preferable that the pretreatment liquid, the colored ink, and the white ink are applied in this order onto the impermeable base material. That is, it is preferable that the image recording method of the present disclosure includes a step of applying the pretreatment liquid onto the impermeable base material and applying the colored ink onto the impermeable base material onto which the pretreatment liquid has been applied and a step of applying the white ink onto the colored ink film formed by the application of the colored ink.

### (Conditions for applying pretreatment liquid, white ink, and colored ink)

The white ink and the colored ink are applied to record an image in the image recording step under a condition that a region where a region to which the pretreatment liquid is applied, a region to which the white ink is applied, and a region to which the colored ink is applied overlap each other in plan view (hereinafter, referred to as "overlapping region K") is generated.

In the image recording step, each of the pretreatment liquid, the white ink, and the colored ink may be applied under a condition that the overlapping region and a region other than the overlapping region are generated.

For example, the colored ink may be applied in a pattern onto the impermeable base material onto which the pretreatment liquid has been applied to form a patterned colored ink film, and the white ink may be applied (for example, in a solid) onto a region straddling the colored ink film and a region other than the colored ink film (for example, a region covering the colored ink film and the entire peripheral area) to form a white ink film. In this case, the region where the colored ink film is present corresponds to "overlapping region" described above, and the region where the white ink film is present without the presence of the colored ink film and the region where the colored ink film and the white ink film are not present correspond to "region other than the overlapping region" described above.

### (Mass of pretreatment liquid, white ink, and colored ink to be applied)

It is preferable that an image is recorded in the image recording step under a condition that the total mass of the first organic solvent, the second organic solvent, and the third organic solvent to be applied per unit area in the overlapping region K is 5.5 g/m² or less. Further, in a case where the pretreatment liquid does not contain the third organic solvent, an image is recorded in the image recording step under a condition that the total mass of the first organic solvent and the second organic solvent to be applied per unit area in the overlapping region K is 5.5 g/m² or less.

In a case where the total mass of the first organic solvent, the second organic solvent, and the third organic solvent to be applied per unit area in the overlapping region K is 5.5 g/m² or less, the image intensity is ensured, and the adhesiveness between the image and the base material for lamination is improved in a case where the white ink and the colored ink are applied onto the impermeable base material onto which the pretreatment liquid has been applied. As a result, the lamination strength is excellent.

The mass (in units of g/m²) of the third organic solvent to be applied per unit area in the overlapping region K is calculated by the product of the mass of the pretreatment liquid to be applied per unit area in the overlapping region K and the content (% by mass) of the third organic solvent with respect to the total amount of the pretreatment liquid.

From the viewpoint of further improving the lamination strength, the total mass of the first organic solvent, the second organic solvent, and the third organic solvent to be applied per unit area in the overlapping region K is preferably 5.5 g/m² or less, more preferably 5.0 g/m² or less, and still more preferably 4.5 g/m² or less. The lower limit of the total mass thereof to be applied is, for example, 2.0 g/m², preferably 3.0 g/m², and more preferably 3.5 g/m² from the viewpoint of the lamination strength.

Further, it is preferable that an image is recorded in the image recording step under a condition that the mass of the third organic solvent per unit area in the overlapping region K is 0.2 g/m² or less. Further, in a case where the pretreatment liquid does not contain the third organic solvent, the mass of the third organic solvent to be applied per unit area in the overlapping region K is 0 g/m².

From the viewpoint of further improving the lamination strength, the mass of the third organic solvent to be applied in the overlapping region K is preferably 0.08 g/m² or less. The lower limit of the total mass thereof to be applied may be 0 g/m².

### (Method of applying pretreatment liquid)

A method of applying the pretreatment liquid is not particularly limited, and examples thereof include known methods such as a coating method, a dipping method, and an ink jet recording method.

Examples of the coating method include known coating methods using a bar coater, an extrusion die coater, an air doctor coater, a blade coater, a rod coater, a knife coater, a squeeze coater, and a reverse roll coater.

After the application of the pretreatment liquid, the pretreatment liquid applied onto the impermeable base material may be heated and dried. Examples of the means for heating and drying the pretreatment liquid include known heating means such as a heater, known air blowing means such as a dryer, and means for combining these.

Examples of the method of heating and drying the pretreatment liquid include a method of applying heat using a heater or the like from a side of the impermeable base material opposite to the surface onto which the pretreatment liquid has been applied; a method of applying warm air or hot air to the surface of the impermeable base material onto which the pretreatment liquid has been applied; a method of applying heat using an infrared heater from the surface of the impermeable base material onto which the pretreatment liquid has been applied or from a side of the impermeable base material opposite to the surface onto which the pretreatment liquid has been applied; and a method of combining a plurality of these methods.

The heating temperature of heating and drying the pretreatment liquid is preferably 35°C or higher and more preferably 40°C or higher. The upper limit of the heating temperature is not particularly limited, but is preferably 100°C, more preferably 90°C, and still more preferably 70°C.

The time of heating and drying the pretreatment liquid is not particularly limited, but is preferably in a range of 0.5 seconds to 60 seconds, more preferably in a range of 0.5 seconds to 20 seconds, and still more preferably in a range of 0.5 seconds to 10 seconds.

### [Method of producing laminate]

According to the image recording method of the present disclosure, an image recorded material including an impermeable base material and an image recorded on the impermeable base material and having excellent lamination strength in a case where a base material for lamination is laminated on the image and an excellent covering property can be produced.

Therefore, the image recording method of the present disclosure is suitably used for producing a laminate including the above-described image recorded material and a base material for lamination which is laminated on a side of the image recorded material where the image is recorded.

A method of producing a laminate according to an embodiment of the present disclosure includes a step of recording an image on an impermeable base material using the image recording method of the present disclosure and a step of laminating a base material for lamination on a side where the image is recorded, to obtain a laminate.

According to the method of producing a laminate according to the embodiment of the present disclosure, a laminate having excellent lamination strength between the image recorded material and the base material for lamination and an excellent covering property can be produced.

The step of recording an image can refer to the image recording method of the present disclosure described above.

The step of obtaining a laminate is a step of laminating the base material for lamination on a side where the image has been recorded, to obtain a laminate.

It is preferable that the base material for lamination is a resin base material. The resin base material is not particularly limited, and examples thereof include a base material consisting of a thermoplastic resin.

Abase material obtained by molding a thermoplastic resin in a sheet shape is exemplified as the resin base material.

It is preferable that the resin base material contains polypropylene, polyethylene terephthalate, nylon, polyethylene, or polyimide.

The shape of the resin base material is not particularly limited, but it is preferable that the resin base material has a sheet shape. The thickness of the resin base material is preferably in a range of 10 µm to 200 µm and more preferably in a range of 10 µm to 100 µm.

In the step of obtaining a laminate, the base material for lamination may be laminated directly or via another layer (for example, an adhesive layer), on a side where the image has been recorded.

In a case where the base material for lamination is laminated directly on a side where the image has been recorded, the lamination can be performed by a known method such as thermocompression bonding or thermal fusion welding.

Further, in a case where the base material for lamination is laminated on a side where the image has been recorded via an adhesive layer, the lamination can be performed, for example, by a method of coating the side where the image has been recorded with an adhesive, placing the base material for lamination, and bonding the image recorded material to the base material for lamination.

Further, in the case where the base material for lamination is laminated on a side where the image has been recorded via an adhesive layer, the lamination can also be performed by an extrusion lamination method (that is, sandwich lamination) or the like.

It is preferable that the adhesive layer contains an isocyanate compound. In a case where the adhesive layer contains an isocyanate compound, since the adhesiveness between the adhesive layer and the image is further improved, the lamination strength can be further improved.

### [Image recorded material]

An image recorded material according to an embodiment of the present disclosure is an image recorded material including an impermeable base material, and an image recorded on the impermeable base material, in which the image includes a white ink layer in contact with the impermeable base material and containing a white pigment and a colored ink layer in contact with the white ink layer and containing a colored pigment other than the white pigment and has a region where the white ink layer and the colored ink layer overlap each other in plan view, and the mass of the white pigment per unit area in the white ink layer is 0.4 g/m² or greater.

The image recorded material according to the embodiment of the present disclosure has excellent lamination strength in a case where the base material for lamination is laminated on the image. Further, the image recorded material of the present disclosure has an excellent covering property.

It is preferable that the image recorded material according to the embodiment of the present disclosure is obtained by the image recording method of the present disclosure. The preferable aspects of each component in the image recorded material according to the embodiment of the present disclosure are the same as the preferable aspects of each component described in the section of the image recording method of the present disclosure.

### [Laminate]

The laminate according to an embodiment of the present disclosure includes the above-described image recorded material of the present disclosure, and the base material for lamination which is laminated on the image of the image recorded material. The laminate of the present disclosure has an excellent covering property and excellent lamination strength.

The base material for lamination in the laminate according to the embodiment of the present disclosure may be laminated directly or via another layer (for example, an adhesive layer), on a side of the image recorded material where the image has been recorded.

It is preferable that the laminate according to the embodiment of the present disclosure is produced by the method of producing a laminate according to the embodiment of the present disclosure.

The preferable aspects of the base material for lamination and the adhesive layer are respectively the same as the preferable aspects described in the section of the method of producing a laminate.

### [Ink set]

### (Aspect 1)

An ink set according to an embodiment of the present disclosure is an ink set including a white ink that contains a white pigment, a pigment dispersant, an organic solvent, and water, and a colored ink that contains a colored pigment other than the white pigment, an organic solvent, and water, in which the pigment dispersant is a polymer having a crosslinked structure or a block polymer, and the weighted average value of solubility parameters of the organic solvents contained in each of the white ink and the colored ink is 28 MPa^{1/2} or less.

### (Aspect 2)

An ink set according to an embodiment of the present disclosure is an ink set including a white ink that contains a white pigment, a pigment dispersant, an organic solvent, and water, and a colored ink that contains a colored pigment other than the white pigment and water, in which the pigment dispersant is a polymer having a crosslinked structure or a block polymer, and the organic solvent includes at least one kind of alkylene glycol having a boiling point of 120°C to 200°C and at least one kind of alkylene glycol alkyl ether having a boiling point of 120°C to 200°C.

### (Aspect 3)

An ink set according to an embodiment of the present disclosure is an ink set including a white ink that contains a white pigment, a pigment dispersant, an organic solvent, and water, and a colored ink that contains a colored pigment other than the white pigment and water, in which the pigment dispersant is a polymer having a crosslinked structure or a block polymer, and the organic solvent includes at least one kind of alkylene glycol having a boiling point of 120°C to 200°C and at least two kinds of alkylene glycol alkyl ethers having a boiling point of 120°C to 200°C.

An image recorded material having an excellent covering property and excellent lamination strength can be obtained by using the ink set according to the embodiment of the present disclosure.

The preferable aspects of each component in the ink set according to the embodiment of the present disclosure are the same as the preferable aspects of each component described in the section of the image recording method of the present disclosure.

### Examples

Hereinafter, the present disclosure will be described in more detail based on examples, but the present disclosure is not limited to the following examples unless the gist thereof is overstepped.

### - White pigment dispersion liquid A (dispersion by random polymer) -

965 g of dipropylene glycol was added to a 5000 mL three-neck flask provided with a stirrer and a cooling pipe and heated to 85°C in a nitrogen atmosphere. A solution I obtained by dissolving 640 g of benzyl methacrylate, 340 g of methacrylic acid, and 19.94 g of 2-mercaptopropionic acid in 370.28 g of dipropylene glycol, and a solution II obtained by dissolving 17.69 g of t-butyl peroxy-2-ethylhexanoate (product name, "PERBUTYL O", manufactured by NOF Corporation) in 221.17 g of dipropylene glycol were respectively prepared. The solution I was added dropwise to the three-neck flask for 4 hours, and the solution II was added dropwise thereto for 5 hours. After completion of the dropwise addition, the solution was allowed to further react for 2 hours. The disappearance of the monomers was confirmed by ¹H-NMR. The obtained reaction solution was heated to 70°C, 248.02 g of a 50 mass% potassium hydroxide aqueous solution was added thereto, 107.48 g of dipropylene glycol and 75.52 g of pure water were added thereto, and the solution was stirred, thereby obtaining a 37 mass% solution of a random polymer. This random polymer was defined as a pigment dispersant P1. The structural units constituting the obtained random polymer were confirmed by ¹H-NMR. In addition, the weight-average molecular weight (Mw) was acquired by GPC. The weight-average molecular weight (Mw) of the obtained pigment dispersant P1 was 8400, and the acid value thereof was 221.7 mgKOH/g.

150 parts by mass of the pigment dispersant P1 was dissolved in water, and a polymer aqueous solution was prepared such that the concentration of the pigment dispersant P1 was set to approximately 25% by mass. 96 parts by mass of the polymer aqueous solution, 300 parts by mass of C.I. Pigment White 6 (trade name, "JR-405", manufactured by Tayca Corporation, titanium oxide) as a white pigment, and 270 parts by mass of water were mixed to obtain a mixed solution. A potassium hydroxide aqueous solution was added to the obtained mixed solution, and the pH after neutralization was adjusted to 8.7. Further, the pH is a value measured at 25°C using a pH meter (model name: WM-50EG, manufactured by DKK-Toa Corporation). Next, the mixed solution after neutralization was subjected to a dispersion treatment for 3 hours using a bead mill (bead diameter: 0.1 mmcp, zirconia beads). In this manner, a white pigment dispersion liquid A (uncrosslinked dispersion liquid) in which the white pigment was dispersed by the pigment dispersant P1 was obtained. The pigment concentration of the uncrosslinked dispersion liquid was 45% by mass, and the concentration of the pigment dispersant P1 was 3.6% by mass.

### - White pigment dispersion liquid B (dispersion by crosslinked polymer)-

180 parts by mass of the polymer aqueous solution in which the concentration of the pigment dispersant P1 was approximately 25% by mass, 300 parts by mass of C.I. Pigment White 6 (trade name, "JR-405", manufactured by Tayca Corporation, titanium oxide) as a white pigment, and 180 parts by mass of water were mixed to obtain a mixed solution. A potassium hydroxide aqueous solution was added to the obtained mixed solution, and the pH after neutralization was adjusted to 8.7. Further, the pH is a value measured at 25°C using a pH meter (model name: WM-50EG, manufactured by DKK-Toa Corporation). Next, the mixed solution after neutralization was subjected to a dispersion treatment for 3 hours using a bead mill (bead diameter: 0.1 mmcp, zirconia beads). In this manner, a precursor of a white pigment dispersion liquid B (uncrosslinked dispersion liquid) in which the white pigment was dispersed by the pigment dispersant P1 was obtained. The pigment concentration of the precursor of the dispersion liquid B was 45% by mass.

2.70 parts by mass of trimethylolpropane polyglycidyl ether (product name, "Denacol EX-321", manufactured by Nagase ChemteX Corporation) as a crosslinking agent and 29.5 parts by mass of a boric acid aqueous solution (concentration of boric acid: 4% by mass) were added to 136 parts by mass of the precursor of the white pigment dispersion liquid B (uncrosslinked dispersion liquid), and the mixture was allowed to react at 70°C for 6 hours and cooled to 25°C. In this manner, the pigment dispersant P1 was crosslinked to obtain a white pigment dispersion liquid (crosslinked dispersion liquid) in which the white pigment was dispersed by a pigment dispersant P1a. The pigment dispersant P1a is a polymer in which the pigment dispersant P1 is crosslinked with a crosslinking agent. Ion exchange water was added to the crosslinked dispersion liquid so that the concentration of the pigment was set to 15% by mass. Ultrafiltration was performed by allowing 600 mL of the crosslinked dispersion liquid to flow into an ultrafiltration device (cross-flow type ultrafilter (UF), manufactured by Sartorius AG) provided with a polyether sulfone (PESU) film (size of micropores: 0.1 µm) for 1 minute. At this time, the liquid temperature was adjusted to 25°C, and the ultrafiltration was performed 8 times by setting 1 time of the volume magnification of the charged liquid as 1 time. Ion exchange water was added such that the concentration of the pigment was set to 45% by mass. In this manner, the white pigment dispersion liquid B was obtained. The acid value of the pigment dispersant P1a (crosslinked polymer) contained in the white pigment dispersion liquid B was 105 mgKOH/g. Further, the concentration of the pigment dispersant P1a was 3.6% by mass. Further, the concentration of the pigment dispersant P1a is a value obtained by subtracting the pigment concentration from the concentration of solid contents obtained by drying the pigment dispersion liquid B under reduced pressure.

### - White pigment dispersion liquid C (dispersion by block polymer) -

A block polymer serving as a pigment dispersant was synthesized with reference to Synthesis Example 8 of JP2015-83688A. The details are described below.

266 parts by mass of diethylene glycol dimethyl ether, 6.2 parts by mass of 2-iodo-2-cyanopropane, 120 parts by mass of methyl methacrylate (MMA), 28.8 parts by mass of acrylic acid (AA), 67.2 parts by mass of cyclohexyl methacrylate (CHMA), 7.9 parts by mass of azobisdimethylisovaleronitrile, and 0.7 parts by mass of 2-t-butyl-4,6-dimethylphenol were added to a reactor of a 1 L separable flask equipped with a stirrer, a backflow condenser, a thermometer, and a nitrogen introduction pipe, and the mixture was stirred while nitrogen was allowed to flow. Next, the temperature (reaction temperature) of the mixture in the reactor was increased to 70°C, and the mixture was polymerized for 3 hours, thereby obtaining a polymerization solution A containing an MMA/AA/CHMA copolymer. After 3 hours, as a result of sampling a part of the polymerization solution A and measuring the solid content, the solid content was 42.0% by mass, and thus it was confirmed that most of the monomers were polymerized. Further, the weight-average molecular weight of the MMA/AA/CHMA copolymer was measured by GPC, and the weight-average molecular weight (Mw) thereof was 7,500. The acid value of this MMA/AA/CHMA copolymer was 101.0 mgKOH/g.

Next, a mixture of benzyl methacrylate (BzMA) (35.2 parts by mass) and V-65 (manufactured by FUJIFILM Wako Pure Chemical Corporation, oil-soluble azo polymerization initiator, 2,2'-azobis(2,4-dimethylvaleronitrile)) (0.3 parts by mass) was added to the polymerization solution A, and the solution was polymerized at 70°C for 3 hours, thereby obtaining a polymerization solution B containing a block polymer. Here, the obtained block polymer is a block polymer containing an A block which is an MMA/AA/CHMA copolymer and a B block which is a BzMA homopolymer. As a result of measurement of the solid content in the polymerization solution B, the solid content thereof was 43.2% by mass and it was confirmed that most of the monomers were polymerized. The Mw of the block polymer was 8,500, and the acid value was 89.3 mgKOH/g.

136.4 parts by mass of the obtained block polymer, 163.6 parts by mass of butyl carbitol, and 450 parts by mass of C.I. Pigment White 6 (trade name, "JR-405", manufactured by Tayca Corporation, titanium oxide) as a white pigment were blended with each other and stirred with a disper. Next, the white pigment was sufficiently dispersed using a horizontal media disperser, thereby obtaining an oil-based pigment dispersion liquid. The average particle diameter of the white pigment dispersed in the oil-based pigment dispersion liquid was 290 nm. The viscosity of the oil-based pigment dispersion liquid was 86.3 mPa s. Next, a mixed solution consisting of 4.0 parts by mass of potassium hydroxide and 341 parts by mass of water was gradually added to 700 parts by mass of the oil-based pigment dispersion liquid while being stirred using a disper, and the solution was neutralized for phase conversion. Thereafter, the white pigment was sufficiently dispersed using a horizontal media disperser, thereby obtaining a pigment dispersion liquid.

Next, ultrafiltration was performed by allowing ion exchange water to flow through the obtained pigment dispersion liquid at a flow rate of 600 mL per minute using an ultrafiltration device (cross-flow type ultrafilter (UF), manufactured by Sartorius AG). The liquid temperature was maintained at 25°C, and the ultrafiltration was performed eight times by setting one time the volume of the charged liquid to once. Ion exchange water was added thereto to obtain a white pigment dispersion liquid C in which the pigment concentration was 45% by mass and the concentration of the pigment dispersant (block polymer) was 3.6% by mass. Further, the concentration of the block polymer is a value obtained by subtracting the pigment concentration from the concentration of solid contents obtained by drying the pigment dispersion liquid C under reduced pressure.

### - White pigment dispersion liquid D (self-dispersion) -

100 g of titanium oxide (number average primary particle diameter: 130 nm or greater and 350 nm or less, median value: 240 nm) was added to 3,000 mL of a 2.5% sodium hypochlorite solution, and the solution was stirred at a temperature of 60°C and a speed of 300 rpm for 10 hours. A reaction solution of the white pigment obtained by applying a carboxy group to the surface of titanium oxide was obtained by performing an oxidation treatment. The obtained reaction solution was filtered, and the white pigment filtered by separation was neutralized with a sodium hydroxide solution, and ultrafiltration was performed. Next, ultrafiltration was performed with a dialysis membrane using ion exchange water, and ultrasonic dispersion was further performed using an ultrasonic disperser, thereby obtaining a white pigment dispersion liquid D having a pigment concentration of 45% by mass.

### - Preparation of white inks W1 to W31 -

In white inks W 1 to W29 and W31, each white ink was prepared by mixing any of the white pigment dispersion liquids A to C, an organic solvent, resin particles, and water and setting the content of each component to the content (% by mass) listed in Tables 1 to 3. In Tables 1 to 3, the white pigment dispersion liquid A was used in an example in which the dispersant was a random polymer, the white pigment dispersion liquid B was used in an example in which the dispersant was a crosslinked polymer, and the white pigment dispersion liquid C was used in an example in which the dispersant was a block polymer.

In the white ink W30, the white ink was prepared by mixing the white pigment dispersion liquid D, an organic solvent, resin particles, and water and setting the content of each component to the content listed in Table 3.

Further, the content of water is the remaining amount set such that the total amount of the white ink reached 100% by mass.

In the tables, the abbreviations for organic solvents are as follows.
PGmME: propylene glycol monomethyl ether
PGmEE: propylene glycol monoethyl ether
PGmPE: propylene glycol monopropyl ether
PGmBE: propylene glycol monobutyl ether
EGmPE: ethylene glycol monopropyl ether
EGmBE: ethylene glycol monobutyl ether
PG: propylene glycol
DPGmME: dipropylene glycol monomethyl ether
DEGmEE: diethylene glycol monoethyl ether
EG: ethylene glycol
DEGmBE: diethylene glycol monobutyl ether
DPG: dipropylene glycol
1,2-HD: 1,2-hexanediol
DEG: diethylene glycol
TEG: triethylene glycol

Resin particles were prepared by the following method.

A 2 L three-neck flask (reaction container) provided with a stirrer, a thermometer, a reflux condenser, and a nitrogen gas introduction pipe was charged with 560.0 g of methyl ethyl ketone, and the solution was heated to 87°C. Next, a mixed solution consisting of 220.4 g of methyl methacrylate, 301.6 g of isobornyl methacrylate, 58.0 g of methacrylic acid, 108 g of methyl ethyl ketone, and 2.32 g of dimethyl 2,2'-azobis(2-methylpropionate) (product name, "V-601", manufactured by FUJIFILM Wako Pure Chemical Corporation) as a polymerization initiator was added dropwise to the methyl ethyl ketone in the reaction container at a constant speed such that the dropwise addition was completed for 2 hours while the reflux state in the reaction container was maintained. Further, the reflux state was maintained until the reaction was completed. After completion of the dropwise addition, the reaction solution was stirred for 1 hour and subjected to an operation of the following step (1).

Step (1): A solution consisting of 1.16 g of "V-601" and 6.4 g of methyl ethyl ketone was added to the solution, and the resulting solution was stirred for 2 hours.

Next, the operation of the step (1) was repeatedly performed four times, a solution formed of 1.16 g of "V-601" and 6.4 g of methyl ethyl ketone was added to the solution, and the resulting solution was stirred for 3 hours.

After completion of the reaction, the temperature of the solution was lowered to 65°C, 163.0 g of isopropanol was added thereto, and the solution was allowed to be naturally cooled, thereby obtaining a polymerization solution containing a copolymer (concentration of solid contents of 41.0% by mass).

Next, 317.3 g of the obtained polymerization solution was weighed, 46.4 g of isopropanol, 1.65 g of a 20 mass% maleic acid anhydride aqueous solution (corresponding to 0.3% by mass as maleic acid with respect to the copolymer), and 40.77 g of a 2 mol/L sodium hydroxide aqueous solution were added to the solution, and the temperature of the liquid in the reaction container was increased to 70°C.

Next, 380 g of distilled water was added dropwise to the liquid, which had been heated to 70°C, at a speed of 10 mL/min. Thereafter, a total amount of 287.0 g of isopropanol, methyl ethyl ketone, and distilled water was distilled off by maintaining the temperature of the liquid in the reaction container at 70°C for 1.5 hours under reduced pressure. 0.278 g (440 ppm as benzisothiazolin-3-one with respect to solid content of polymer) of PROXEL GXL (S) (manufactured by Arch Chemicals, Inc.) was added to the obtained liquid.

The obtained liquid was filtered through a filter with a pore size of 1 µm, and the filtrate was collected, thereby obtaining an aqueous dispersion liquid (concentration of solid contents: 23.2% by mass) of the resin particles A formed of a copolymer of methyl methacrylate, isobornyl methacrylate, and methacrylic acid at a mass ratio of 70/20/10. 50% by mass of the structural unit derived from methacrylic acid constituting the resin was a sodium methacrylate salt. The volume average particle diameter of the resin particles A was 5.0 nm, and the weight-average molecular weight (Mw) thereof was 60,000.

In Tables 1 to 3, the first organic solvent A denotes an organic solvent having a boiling point of 120°C to 200°C, the first organic solvent B denotes an organic solvent having a boiling point of higher than 200°C and 240°C or lower, and the first organic solvent C denotes an organic solvent having a boiling point of higher than 240°C among the organic solvents contained in the white ink.

**[Table 1]**

| | | Boiling point (°C) | SP value | W1 | W2 | W3 | W4 | W5 | W6 | W7 | W8 | W9 | W10 | W11 |
|---|---|---|---|---|---|---|---|---|---|---|---|---|---|---|
| First organic solvent A | PGmME | 120 | 23.0 | 2.0 | 2.0 | 2.0 | 2.0 | 2.5 | 2.3 | 1.0 | 2.0 | - | 1.5 | 4.0 |
| | PGmEE | 133 | 22.3 | - | - | - | - | - | - | - | - | - | - | - |
| | PGmPE | 150 | 21.8 | - | - | - | - | - | - | - | - | - | - | - |
| | PGmBE | 170 | 21.4 | - | - | - | - | - | - | - | - | - | - | - |
| | EGmPE | 150 | 22.7 | - | - | - | - | - | - | - | - | - | - | - |
| | EGmBE | 171 | 22.1 | - | - | - | - | - | - | - | - | - | - | - |
| | PG | 188 | 27.6 | 24.0 | 24.0 | 24.0 | 24.0 | 30.0 | 27.7 | 12.0 | 24.0 | 26.0 | 24.5 | 22.0 |
| | DPGmME | 189.6 | 21.3 | - | - | - | - | - | - | - | - | - | - | - |
| | DEGmEE | 194 | 22.4 | - | - | - | - | - | - | - | - | - | - | - |
| | EG | 198 | 30.3 | - | - | - | - | - | - | - | - | - | - | - |
| White pigment | | | | 6.0 | 10.0 | 14.0 | 12.0 | 12.0 | 12.0 | 12.0 | 12.0 | 12.0 | 12.0 | 12.0 |
| Dispersant | | Block polymer | | - | - | - | - | - | - | - | 0.96 | 0.96 | 0.96 | 0.96 |
| | | Crosslinked polymer | | 0.48 | 0.80 | 1.12 | 0.96 | 0.96 | 0.96 | 0.96 | - | - | - | - |
| | | Random polymer | | - | - | - | - | - | - | - | - | - | - | - |
| Resin particles | | | | 6.0 | 6.0 | 6.0 | 6.0 | 6.0 | 6.0 | 6.0 | 6.0 | 6.0 | 6.0 | 6.0 |
| Weighted average value of SP values of organic solvents | | | | 27.2 | 27.2 | 27.2 | 27.2 | 27.2 | 27.2 | 27.2 | 27.2 | 27.6 | 27.3 | 26.9 |

**[Table 2]**

| | | Boiling point (°C) | SP value | W12 | W13 | W14 | W15 | W16 | W17 | W18 | W19 | W20 | W21 | W22 |
|---|---|---|---|---|---|---|---|---|---|---|---|---|---|---|
| First organic solvent A | PGmME | 120 | 23.0 | 1.0 | 2.0 | - | 2.0 | - | - | - | - | - | - | - |
| | PGmEE | 133 | 22.3 | - | - | - | - | 2.0 | - | - | - | - | - | - |
| | PGmPE | 150 | 21.8 | - | - | 2.0 | - | - | 2.0 | - | - | - | - | - |
| | PGmBE | 170 | 21.4 | - | - | - | - | - | - | 2.0 | - | - | - | - |
| | EGmPE | 150 | 22.7 | - | - | - | - | - | - | - | 2.0 | - | - | - |
| | EGmBE | 171 | 22.1 | - | - | - | - | - | - | - | - | 2.0 | - | - |
| | PG | 188 | 27.6 | 24.0 | 22.0 | 22.0 | 22.0 | 24.0 | 24.0 | 24.0 | 24.0 | 24.0 | 24.0 | 24.0 |
| | DPGmME | 189.6 | 21.3 | - | - | 2.0 | - | - | - | - | - | - | 2.0 | - |
| | DEGmEE | 194 | 22.4 | 1.0 | 2.0 | - | 2.0 | - | - | - | - | - | - | 2.0 |
| | EG | 198 | 30.3 | - | - | - | - | - | - | - | - | - | - | - |
| White pigment | | | | 12.0 | 12.0 | 12.0 | 12.0 | 12.0 | 12.0 | 12.0 | 12.0 | 12.0 | 12.0 | 12.0 |

| Dispersant | Block polymer | 0.96 | 0.96 | 0.96 | - | - | - | - | - | - | - | - | | |
|---|---|---|---|---|---|---|---|---|---|---|---|---|---|---|
| | Crosslinked polymer | - | - | - | 0.96 | 0.96 | 0.96 | 0.96 | 0.96 | 0.96 | 0.96 | 0.96 | | |
| | Random polymer | - | - | - | - | - | - | - | - | - | - | - | | |
| Resin particles | | 6.0 | 6.0 | 6.0 | 6.0 | 6.0 | 6.0 | 6.0 | 6.0 | 6.0 | 6.0 | 6.0 | | |
| Weighted average value of SP values of organic solvents | | 27.2 | 26.8 | 26.7 | 26.8 | 27.2 | 27.1 | 27.1 | 27.2 | 27.2 | 27.1 | 27.2 | | |

**[Table 3]**

| | | Boiling point (°C) | SP value | W23 | W24 | W25 | W26 | W27 | W28 | W29 | W30 | W31 | W32 |
|---|---|---|---|---|---|---|---|---|---|---|---|---|---|
| First organic solvent A | PGmME | 120 | 23.0 | 2.0 | 2.0 | 2.0 | 2.0 | 2.0 | 2.0 | 2.0 | 2.0 | 2.0 | 3.0 |
| | PGmEE | 133 | 22.3 | - | - | - | - | - | - | - | - | - | - |
| | PGmPE | 150 | 21.8 | - | - | - | - | - | - | - | - | - | - |
| | PGmBE | 170 | 21.4 | - | - | - | - | - | - | - | - | - | - |
| | EGmPE | 150 | 22.7 | - | - | - | - | - | - | - | - | - | - |
| | EGmBE | 171 | 22.1 | - | - | - | - | - | - | - | - | - | - |
| | PG | 188 | 27.6 | - | 24.0 | 22.0 | 22.0 | 22.0 | 22.0 | 22.0 | 22.0 | 22.0 | 20.0 |
| | DPGmME | 189.6 | 21.3 | - | - | - | - | - | - | - | - | - | - |
| | DEGmEE | 194 | 22.4 | 2.0 | 2.0 | 2.0 | 2.0 | 2.0 | 2.0 | 2.0 | 2.0 | 2.0 | 3.0 |
| | EG | 198 | 30.3 | 22.0 | - | - | - | - | - | - | - | - | - |
| First organic solvent B | DEGmBE | 230 | 21.5 | - | - | 2.0 | - | - | - | - | - | - | - |
| | DPG | 230.5 | 27.1 | - | - | - | 2.0 | - | - | - | - | - | - |
| | 1,2-HD | 223 | 21.3 | - | - | - | - | 2.0 | - | - | - | - | - |
| First organic solvent C | DEG | 245 | 30.6 | - | - | - | - | - | 2.0 | - | - | - | - |
| | TEG | 285 | 27.8 | - | - | - | - | - | - | 4.0 | - | - | - |
| White pigment | | | | 12.0 | 12.0 | 12.0 | 12.0 | 12.0 | 12.0 | 12.0 | 12.0 | 12.0 | 12.0 |
| Dispersant | | Block polymer | | 0.96 | 0.96 | 0.96 | 0.96 | 0.96 | 0.96 | 0.96 | - | - | - |
| | | Crosslinked polymer | | - | - | - | - | - | - | - | - | - | - |
| | | Random polymer | | - | - | - | - | - | - | - | 0.96 | - | 0.96 |
| Resin particles | | | | 6.0 | 6.0 | 6.0 | 6.0 | 6.0 | 6.0 | 6.0 | 6.0 | 6.0 | 6.0 |
| Weighted average value of SP values of organic solvents | | | | 29.2 | 26.9 | 26.5 | 26.9 | 26.4 | 27.1 | 27.0 | 26.8 | 26.8 | 26.5 |

### <Preparation of colored ink>

The following pigment dispersion liquids were prepared as a cyan pigment dispersion liquid, a magenta pigment dispersion liquid, a yellow pigment dispersion liquid, and a black pigment dispersion liquid. Each of these pigment dispersion liquids is a dispersion liquid in which a pigment of each color is dispersed by a crosslinked polymer.
- Cyan pigment dispersion liquid (product name, "APD 3000 Cyan (pigment concentration of 14.0% by mass)", manufactured by FUJIFILM Imaging Colorants Ltd.)
- Magenta pigment dispersion liquid (product name, "APD3000 Magenta (pigment concentration of 14.0% by mass)", manufactured by FUJIFILM Imaging Colorants Ltd.)
- Yellow pigment dispersion liquid: (product name "APD3000 Yellow (pigment concentration of 10.0% by mass)", manufactured by FUJIFILM Imaging Colorants Ltd.)
- Black pigment dispersion liquid: (product name "APD3000 Black (pigment concentration of 10.0% by mass)", manufactured by FUJIFILM Imaging Colorants Ltd.)

### - Preparation of cyan inks C1 to C6 -

In cyan inks C1 to C6, each cyan ink was prepared by mixing the cyan pigment dispersion liquid, an organic solvent, resin particles, and water and setting the content of each component to the content (% by mass) listed in Table 4.

Further, the concentration of the crosslinked polymer as a pigment dispersant is a value obtained by subtracting the pigment concentration from the concentration of solid contents obtained by drying each pigment dispersion liquid under reduced pressure.

### - Preparation of magenta ink M1, yellow ink Y1, and black ink Bk1 -

In the magenta ink M1, the magenta ink was prepared by mixing the magenta pigment dispersion liquid, an organic solvent, resin particles, and water and setting the content of each component to the content (% by mass) listed in Table 5.

In the yellow ink Y1, the yellow ink was prepared by mixing the yellow pigment dispersion liquid, an organic solvent, resin particles, and water and setting the content of each component to the content (% by mass) listed in Table 5.

In the black ink Bk1, the black ink was prepared by mixing the black pigment dispersion liquid, an organic solvent, resin particles, and water and setting the content of each component to the content (% by mass) listed in Table 5.

Further, the content of water is the remaining amount set such that the total amount of each colored ink reached 100% by mass.

In Tables 4 and 5, the second organic solvent A denotes an organic solvent having a boiling point of 120°C to 200°C among the organic solvents contained in the colored ink.

**[Table 4]**

| | | Boiling point (°C) | SP value | C1 | C2 | C3 | C4 | C5 | C6 |
|---|---|---|---|---|---|---|---|---|---|
| Second organic solvent A | PGmME | 120 | 23.0 | 2.0 | 2.5 | 2.3 | 1.0 | - | 4.0 |
| | PGmEE | 133 | 22.3 | - | - | - | - | - | - |
| | PGmPE | 150 | 21.8 | - | - | - | - | - | - |
| | PGmBE | 170 | 21.4 | - | - | - | - | - | - |
| | EGmPE | 150 | 22.7 | - | - | - | - | - | - |
| | EGmBE | 171 | 22.1 | - | - | - | - | - | - |
| | PG | 188 | 27.6 | 24.0 | 30.0 | 27.7 | 12.0 | 26.0 | 22.0 |
| | DPGmME | 189.6 | 21.3 | - | - | - | - | - | - |
| | DEGmEE | 194 | 22.4 | - | - | - | - | - | - |
| | EG | 198 | 30.3 | - | - | - | - | - | - |
| Cyan pigment | | | | 3 | 3 | 3 | 3 | 3 | 3 |
| Dispersant | | Crosslinked polymer | | 1.4 | 1.4 | 1.4 | 1.4 | 1.4 | 1.4 |
| Resin particles | | | | 5 | 5 | 5 | 5 | 5 | 5 |
| Weighted average value of SP values of organic solvents | | | | 27.2 | 27.2 | 27.2 | 27.2 | 27.6 | 26.9 |

**[Table 5]**

| | | Boiling point (°C) | SP value | M1 | Y1 | Bk1 |
|---|---|---|---|---|---|---|
| Second organic solvent A | PGmME | 120 | 23.0 | - | - | - |
| | PGmEE | 133 | 22.3 | - | - | - |
| | PGmPE | 150 | 21.8 | 2.0 | 2.0 | 2.0 |
| | PGmBE | 170 | 21.4 | - | - | - |
| | EGmPE | 150 | 22.7 | - | - | - |
| | EGmBE | 171 | 22.1 | - | - | - |
| | PG | 188 | 27.6 | 22.0 | 22.0 | 22.0 |
| | DPGmME | 189.6 | 21.3 | 2.0 | 2.0 | 2.0 |
| | DEGmEE | 194 | 22.4 | - | - | - |
| | EG | 198 | 30.3 | - | - | - |
| Magenta pigment | | | | 6 | - | - |
| Yellow pigment | | | | - | 4 | - |
| Black pigment | | | | - | - | 4 |
| Dispersant | | Crosslinked polymer | | 2.7 | 1.8 | 1.8 |
| Resin particles | | | | 5 | 5 | 5 |
| Weighted average value of SP values of organic solvents | | | | 26.7 | 26.7 | 26.7 |

### <Preparation of pretreatment liquid>

The following components were mixed to have the following contents, thereby preparing pretreatment liquids T1 and T2.

### - Pretreatment liquid T1 -

· Aggregating agent: malonic acid: 5% by mass
· Surfactant: sodium dodecyl benzene sulfonate (hard type), (manufactured by Tokyo Chemical Industry Co., Ltd.): 1% by mass
· Water: remaining amount set such that total amount of pretreatment liquid reached 100% by mass

### - Pretreatment liquid T2 -

· Aggregating agent: malonic acid: 5% by mass
· Third organic solvent: propylene glycol (boiling point of 188°C): 5% by mass
· Surfactant: sodium dodecyl benzene sulfonate (hard type), (manufactured by Tokyo Chemical Industry Co., Ltd.): 1% by mass
· Water: remaining amount set such that total amount of pretreatment liquid reached 100% by mass

### [Image recording]

A polyethylene terephthalate (PET) base material (product name, "FE2001", manufactured by Futamura Chemical Co., Ltd., thickness of 12 µm, width of 100 mm, length of 200 mm) was prepared as an impermeable base material (hereinafter, also simply referred to as "base material".

An image recording device including a transport mechanism for transporting the base material, a wire bar coater for applying the pretreatment liquid, a first inkjet head for applying the colored ink, and a second ink jet head for applying the white ink in this order from the upstream side of the base material in the transport direction was prepared. Further, in a case where two or more kinds of colored inks were applied, the number of ink jet heads was increased according to the number of colored inks applied.

As both the first ink jet head and the second ink jet head, 1200 dpi/20 inch-width piezo full line heads were used. Here, dpi is an abbreviation for dot per inch.

Both the first ink jet head and the second inkjet head were line heads in which the heads were arranged in a direction (that is, the width direction of the base material) orthogonal to the transport direction of the base material.

As each of the above-described inkjet heads, Samba G3L (manufactured by FUJIFILM DIMATIX) was used.

An image was recorded by setting the base material, the pretreatment liquid, the white ink, and the colored ink on the image recording device and applying the pretreatment liquid, the white ink, and the colored ink onto the base material under a condition that a region where a region to which the pretreatment liquid was applied, a region to which the white ink was applied, and a region where the colored ink was applied overlapped each other in plan view was generated. In this manner, an image recorded material was obtained. Further, in Example 33, an image was recorded by setting the base material, the white ink, and the colored ink on the image recording device without using the pretreatment liquid and applying the white ink and the colored ink onto the base material under a condition that a region where a region to which the white ink was applied and a region where the colored ink was applied overlapped each other in plan view was generated.

Hereinafter, the details of the image recording method in a case of applying the pretreatment liquid will be described. In Example 34, an image was recorded by the same image recording method as in a case where the pretreatment liquid was applied except that the image recording method did not include the step of applying the pretreatment liquid.

The pretreatment liquid was applied onto the base material using a wire bar coater while the base material was moved at a constant speed of 500 mm/sec. The mass of the pretreatment liquid applied was set to the amount (in units of g/m²) listed in Tables 6 to 9.

The mass of the pretreatment liquid to be applied is a value obtained by dividing the mass of the applied pretreatment liquid by the area of the region where the pretreatment liquid was applied.

The mass of the third organic solvent to be applied is a value calculated based on the mass of the pretreatment liquid (in units of g/m²) to be applied and the content (% by mass) of the third organic solvent with respect to the total amount of the pretreatment liquid.

The drying of the pretreatment liquid was started at a site where the application of the pretreatment liquid was completed, under a temperature condition of 50°C using a dryer 1.5 seconds after the completion of the application of the pretreatment liquid to the site, and the drying was completed 3.5 seconds after the completion of the application of the pretreatment liquid. The drying time here was 2 seconds.

While the base material after the pretreatment liquid was completely dried was allowed to move at a constant stage speed of 50 mm/sec, the colored ink was jetted and applied onto the dried pretreatment liquid from the first ink jet head in the form of a solid image, and the white ink was jetted and onto the applied colored ink from the second ink jet head. Here, the white ink was applied to the entire colored ink applied onto the base material. The overlapping regions in the examples and the comparative examples correspond to the region to which the colored ink was applied and the region to which the white ink was applied.

Next, the colored ink and the white ink were dried at 70°C for 10 seconds.

In this manner, a solid image having a laminated structure in which the white ink film was laminated on the colored ink film was obtained. That is, an image recorded material including the base material and the solid image provided on the base material was obtained.

Here, both the colored ink and the white ink were jetted under the conditions of a jetting frequency of 24 kHz and a resolution of 1200 dpi × 1200 dpi (dot per inch).

The liquid droplet amounts in a case of jetting the colored ink and the white ink were adjusted according to the amounts of the colored ink and the white ink applied. The results are listed in Tables 6 to 9.

For example, in Example 1, the liquid droplet amount of the colored ink was set to 4.0 nanograms (corresponding to 8.94 g/m² which was the mass of the colored ink applied), and the liquid droplet amount of the white ink was set to 3.4 nanograms (corresponding to 7.59 g/m² which was the mass of the white ink applied).

Further, an ink which was degassed through a degassing filter and in which the temperature thereof was adjusted to 30°C was used as each of the colored ink and the white ink.

The mass of the colored ink to be applied is a value obtained by dividing the mass of the colored ink applied to the overlapping region by the area of the overlapping region.

The mass of the second organic solvent to be applied is a value calculated based on the mass of the colored ink (in units of g/m²) to be applied and the content (% by mass) of the second organic solvent with respect to the total amount of the colored ink.

The mass of the white ink to be applied is a value obtained by dividing the mass of the white ink applied to the overlapping region by the area of the overlapping region.

The mass of the first organic solvent to be applied is a value calculated based on the mass of the white ink (in units of g/m²) to be applied and the content (% by mass) of the first organic solvent with respect to the total amount of the white ink.

The mass of the white pigment to be applied is a value calculated based on the mass of the white ink (in units of g/m²) to be applied and the content (% by mass) of the white pigment with respect to the total amount of the white ink.

Further, each numerical value calculated and acquired as described above was calculated by using a value one digit larger than the numerical value listed in the table and rounding the calculated value off according to the number of effective digits.

In Tables 6 to 9, "G/A" in the columns of the colored ink denotes the mass ratio of the content of alkylene glycol to the content of alkylene glycol alkyl ether in the colored ink. Similarly, "G/A" in the columns of the white ink denotes the mass ratio of the content of alkylene glycol to the content of alkylene glycol alkyl ether in the white ink. Further, "kind of alkylene glycol alkyl ether" in the columns of the white ink denotes the number of kinds of alkylene glycol alkyl ether contained in the white ink.

### [Evaluation]

The lamination strength, the covering property, and the adhesiveness of the image recorded material, and the re-jettability and the jettability of the white ink were evaluated for each example and each comparative example. The evaluation method is as follows. The evaluation results are listed in Tables 6 to 9.

### - Lamination strength -

An image was recorded by the method described in the section of the image recording to obtain an image recorded material. The obtained image recorded material was used as a lamination strength evaluation sample. The sample was coated with an adhesive for dry lamination (main agent TM-320 (isocyanate compound)/curing agent CAT-13B (alcohol compound), manufactured by Toyo-Morton, Ltd.) within 60 minutes after the image recording using a bar coater and dried at 70°C for 10 seconds. An unstretched polypropylene film (CPP) film (trade name: PYLEN P1128, manufactured by Toyobo Co., Ltd., thickness of 25 µm) was laminated as the base material for lamination on the dried adhesive. In this state, the base material for lamination and the lamination strength evaluation sample were attached to each other, thereby obtaining a laminate. The obtained laminate was aged at 40°C for 48 hours.

A sample piece having a length of 100 mm and a width of 15 mm was cut out from the aged laminate. Next, the base material for lamination and the lamination strength evaluation sample in a region from the one end in the longitudinal direction to a length of 30 mm in the sample piece were peeled by hand. The remaining region with a length of 70 mm was allowed to remain in a state where the base material for lamination and the lamination strength evaluation sample were attached to each other.

Next, a tensile test of stretching the peeled portion of the base material for lamination and the peeled portion of the lamination strength evaluation sample in opposite directions in the sample piece was performed. The stretching direction was a direction perpendicular to the above-described remaining region with a length of 70 mm (the remaining region in a state where the base material for lamination and the lamination strength evaluation sample were attached to each other).

The peel strength for peeling the base material for lamination and the lamination strength evaluation sample in the remaining region with a length of 70 mm was acquired by performing the tensile test, and the obtained peel strength was set as the lamination strength. The evaluation standards are as follows.

AA: The lamination strength between the image recorded material and the base material for lamination was 1.5 N/15 mm or greater.

A: The lamination strength between the image recorded material and the base material for lamination was 1 N/15 mm or greater and less than 1.5 N/mm.

B: The lamination strength between the image recorded material and the base material for lamination was 0.5 N/15 mm or greater and less than 1 N/15 mm.

C: The lamination strength between the image recorded material and the base material for lamination was less than 0.5 N/15 mm.

### - Covering property -

An image was recorded by the method described in the section of the image recording method to obtain an image recorded material. The obtained recorded material was laminated on the measuring paper with the base material side facing down. As the measuring paper, a white background portion of a covering ratio measuring paper (standard: JIS K-5600, manufactured by TP Giken Co., Ltd.) was used. The optical density (OD value) of the overlapping region between the colored ink film and the white ink film was measured from the white solid image side in the obtained image recorded material using a spectral densitometer/colorimeter (product name, "X-Rite eXact (measurement diameter: 2 mm, light source: D50, observer visual field: 2° visual field, density status: StatusT)", manufactured by X-Rite Inc.). The covering property was evaluated based on the optical density (OD value). The evaluation standards are as follows.

AA: The OD value was less than 0.70

A: The OD value was 0.70 or greater and less than 0.85

B: The OD value was 0.85 or greater and less than 1.00

C: The OD value was 1.00 or greater

### - Adhesiveness -

An image was recorded by the method described in the section of the image recording method to obtain an image recorded material. The adhesiveness of the image was evaluated by attaching a piece of Cellotape (registered trademark, No. 405, manufactured by Nichiban Co., Ltd., width of 12 mm, hereinafter, also simply referred to as "tape") onto the solid image in the obtained image recorded material within 30 minutes ± 1 minute after the image recording and peeling the piece of tape off from the image.

Specifically, the tape was attached and peeled off according to the following method.

The tape was taken out at a constant speed and cut to have a length of approximately 75 mm, thereby obtaining a piece of tape.

The obtained piece of tape was superimposed on the solid image, and a region in the piece of tape at a center with a width of 12 mm and a length of 25 mm was attached onto the image using a finger and rubbed firmly with a fingertip.

An end of the piece of tape was grasped in 5 minutes after the piece of tape was attached onto the image and was peeled off from the image at an angle as close as possible to 60° for 0.5 to 1.0 seconds.

The presence or absence of adhesive materials on the peeled piece of tape and the presence or absence of peeling of the image were visually observed. The evaluation standards are as follows.

AA: Adhesive materials were not found from the piece of tape, and peeling of the image was not found.

A: A small amount of colored adhesive materials were found from the piece of tape, and peeling of the image was not found.

B: A small amount of colored adhesive materials were found from the piece of tape, peeling of the image was found, and the area of the peeled image was less than 30% of the image area.

C: Colored adhesive materials were found from the piece of tape, peeling of the image was found, and the area of the peeled image was 30% or greater of the image area.

### - Re-jettability of white ink after suspension of printing -

After the image was recorded by the image recording method, the ink jet head was suspended under the conditions of a temperature of 25°C and a humidity of 50% for 1 minute. The white ink was jetted onto the base material one minute after the suspension under the condition that the mass of the white ink applied per unit area was 4.47 g/m² in a single pass, and a solid image was recorded. In the obtained solid image, an image area recorded immediately after the start of jetting was observed using a microscope, and the width of deviation in the landing position was measured. The evaluation standards are as follows.

AA: Deviation in the landing position was not found.

A: The width of deviation in the landing position was 0.5 mm or less.

B: The width of deviation in the landing position was greater than 0.5 mm and 1.0 mm or less.

C: The width of deviation in the landing position was greater than 1.0 mm.

### - Jettability of white ink -

The white ink was jetted onto the base material under the condition that the mass of the white ink applied per unit area was 4.47 g/m² in a single pass, and a solid image was recorded. The state of the obtained solid image was visually confirmed. The evaluation standards are as follows.

AA: Streaks were not found.

A: One thin streak was found.

B: Two to four thin streaks were found.

C: Five or more thin streaks or dark streaks were found.

**[Table 6]**

| | | Example 1 | Example 2 | Example 3 | Example 4 | Example 5 | Example 6 | Example 7 | Example 8 | Example 9 | Example 10 | Example 11 |
|---|---|---|---|---|---|---|---|---|---|---|---|---|
| Pretreatment liquid | Kind | T1 | T1 | T1 | T1 | T1 | T1 | T1 | T1 | T1 | T1 | T1 |
| | Third organic solvent | 0 | 0 | 0 | 0 | 0 | 0 | 0 | 0 | 0 | 0 | 0 |
| Colored ink | Kind | C1 | C1 | C1 | C1 | C1 | C1 | C1 | C1 | C1 | C1 | C1 |
| | Second organic solvent | 26 | 26 | 26 | 26 | 26 | 26 | 26 | 26 | 26 | 26 | 26 |
| | Second organic solvent A | 26 | 26 | 26 | 26 | 26 | 26 | 26 | 26 | 26 | 26 | 26 |
| | G/A | 12.0 | 12.0 | 12.0 | 12.0 | 12.0 | 12.0 | 12.0 | 12.0 | 12.0 | 12.0 | 12.0 |
| | Weighted average value of SP values of organic solvents | 27.2 | 27.2 | 27.2 | 27.2 | 27.2 | 27.2 | 27.2 | 27.2 | 27.2 | 27.2 | 27.2 |
| White ink | Kind | W1 | W2 | W3 | W4 | W5 | W6 | W7 | W8 | W9 | W10 | W11 |
| | Dispersant | Crosslinked | Crosslinked | Crosslinked | Crosslinked | Crosslinked | Crosslinked | Crosslinked | Block | Block | Block | Block |
| | First organic solvent | 26 | 26 | 26 | 26 | 32.5 | 30 | 13 | 26 | 26 | 26 | 26 |
| | First organic solvent A | 26 | 26 | 26 | 26 | 32.5 | 30 | 13 | 26 | 26 | 26 | 26 |
| | Kind of alkylene glycol alkyl ether | 1 | 1 | 1 | 1 | 1 | 1 | 1 | 1 | 0 | 1 | 1 |
| | G/A | 12.0 | 12.0 | 12.0 | 12.0 | 12.0 | 12.0 | 12.0 | 12.0 | - | 16.3 | 5.5 |
| | Weighted average value of SP values of organic solvents | 27.2 | 27.2 | 27.2 | 27.2 | 27.2 | 27.2 | 27.2 | 27.2 | 27.6 | 27.3 | 26.9 |
| Applied mass (g/m²) | Pretreatment liquid | 1.5 | 1.5 | 1.5 | 1.5 | 1.5 | 1.5 | 1.5 | 1.5 | 1.5 | 1.5 | 1.5 |
| | Colored ink | 8.94 | 8.94 | 8.94 | 8.94 | 8.94 | 8.94 | 8.94 | 8.94 | 8.94 | 8.94 | 8.94 |
| | White ink | 7.59 | 8.49 | 8.49 | 8.49 | 8.49 | 8.49 | 8.49 | 8.49 | 8.49 | 8.49 | 8.49 |
| Applied mass (g/m²) | Third organic solvent | 0 | 0 | 0 | 0 | 0 | 0 | 0 | 0 | 0 | 0 | 0 |
| | Second organic solvent | 2.32 | 2.32 | 2.32 | 2.32 | 2.32 | 2.32 | 2.32 | 2.32 | 2.32 | 2.32 | 2.32 |
| | First organic solvent | 1.97 | 2.21 | 2.21 | 2.21 | 2.76 | 2.55 | 1.10 | 2.21 | 2.21 | 2.21 | 2.21 |
| Total mass of first and second organic solvents applied (g/m²) | | 4.30 | 4.53 | 4.53 | 4.53 | 5.08 | 4.87 | 3.43 | 4.53 | 4.53 | 4.53 | 4.53 |
| Total mass of first, second, and third organic solvents applied (g/m²) | | 4.30 | 4.53 | 4.53 | 4.53 | 5.08 | 4.87 | 3.43 | 4.53 | 4.53 | 4.53 | 4.53 |
| Mass of white pigment applied (g/m²) | | 0.46 | 0.85 | 1.19 | 1.02 | 1.02 | 1.02 | 1.02 | 1.02 | 1.02 | 1.02 | 1.02 |
| Evaluation | Lamination strength | B | A | AA | A | B | A | A | A | B | B | AA |
| | Covering property | B | A | AA | A | A | A | B | A | A | A | A |
| | Adhesiveness | B | B | AA | A | B | B | AA | A | B | B | A |
| | Re-jettability | AA | AA | B | A | AA | A | A | A | A | A | A |
| | Jettability | AA | A | B | A | AA | A | B | A | A | A | A |

**[Table 7]**

| | | Example 12 | Example 13 | Example 14 | Example 15 | Example 16 | Example 17 | Example 18 | Example 19 | Example 20 | Example 21 | Example 22 |
|---|---|---|---|---|---|---|---|---|---|---|---|---|
| Preatreatment liquid | Kind | T1 | T1 | T1 | T1 | T1 | T1 | T1 | T1 | T1 | T1 | T1 |
| | Third organic solvent | 0 | 0 | 0 | 0 | 0 | 0 | 0 | 0 | 0 | 0 | 0 |
| Colored ink | Kind | C1 | C1 | C1 | C1 | C1 | C1 | C1 | C1 | C1 | C1 | C1 |
| | Second organic solvent | 26 | 26 | 26 | 26 | 26 | 26 | 26 | 26 | 26 | 26 | 26 |
| | Second organic solvent A | 26 | 26 | 26 | 26 | 26 | 26 | 26 | 26 | 26 | 26 | 26 |
| | G/A | 12.0 | 12.0 | 12.0 | 12.0 | 12.0 | 12.0 | 12.0 | 12.0 | 12.0 | 12.0 | 12.0 |
| | Weighted average value of SP values of organic solvents | 27.2 | 27.2 | 27.2 | 27.2 | 27.2 | 27.2 | 27.2 | 27.2 | 27.2 | 27.2 | 27.2 |
| White ink | Kind | W12 | W13 | W14 | W15 | W16 | W17 | W18 | W19 | W20 | W21 | W22 |
| | Dispersant | Block | Block | Block | Crosslinked | Crosslinked | Crosslinked | Crosslinked | Crosslinked | Crosslinked | Crosslinked | Crosslinked |
| | First organic solvent | 26 | 26 | 26 | 26 | 26 | 26 | 26 | 26 | 26 | 26 | 26 |
| | First organic solvent A | 26 | 26 | 26 | 26 | 26 | 26 | 26 | 26 | 26 | 26 | 26 |
| | Kind of alkylene glycol alkyl ether | 2 | 2 | 2 | 2 | 1 | 1 | 1 | 1 | 1 | 1 | 1 |
| | G/A | 12.0 | 5.5 | 5.5 | 5.5 | 12.0 | 12.0 | 12.0 | 12.0 | 12.0 | 12.0 | 12.0 |
| | Weighted average value of SP values of organic solvents | 27.2 | 26.8 | 26.7 | 26.8 | 27.2 | 27.1 | 27.1 | 27.2 | 27.2 | 27.1 | 27.2 |
| Applied mass (g/m²) | Pretreatment liquid | 1.5 | 1.5 | 1.5 | 1.5 | 1.5 | 1.5 | 1.5 | 1.5 | 1.5 | 1.5 | 1.5 |
| | Colored ink | 8.94 | 8.94 | 8.94 | 8.94 | 8.94 | 8.94 | 8.94 | 8.94 | 8.94 | 8.94 | 8.94 |
| | White ink | 8.49 | 8.49 | 8.49 | 8.49 | 8.49 | 8.49 | 8.49 | 8.49 | 8.49 | 8.49 | 8.49 |
| Applied mass (g/m²) | Third organic solvent | 0 | 0 | 0 | 0 | 0 | 0 | 0 | 0 | 0 | 0 | 0 |
| | Second organic solvent | 2.32 | 2.32 | 2.32 | 2.32 | 2.32 | 2.32 | 2.32 | 2.32 | 2.32 | 2.32 | 2.32 |
| | First organic solvent | 2.21 | 2.21 | 2.21 | 2.21 | 2.21 | 2.21 | 2.21 | 2.21 | 2.21 | 2.21 | 2.21 |
| Total mass of first and second organic solvents applied (g/m²) | | 4.53 | 4.53 | 4.53 | 4.53 | 4.53 | 4.53 | 4.53 | 4.53 | 4.53 | 4.53 | 4.53 |
| Total mass of first, second, and third organic solvents applied (g/m²) | | 4.53 | 4.53 | 4.53 | 4.53 | 4.53 | 4.53 | 4.53 | 4.53 | 4.53 | 4.53 | 4.53 |
| Mass of white pigment applied (g/m²) | | 1.02 | 1.02 | 1.02 | 1.02 | 1.02 | 1.02 | 1.02 | 1.02 | 1.02 | 1.02 | 1.02 |
| Evaluation | Lamination strength | AA | AA | AA | AA | A | A | A | A | A | A | A |
| | Covering property | A | AA | AA | AA | A | A | A | A | A | A | A |
| | Adhesiveness | A | AA | AA | AA | A | A | A | A | A | A | A |
| | Re-jettability | A | AA | AA | AA | A | A | A | A | A | A | A |
| | Jettability | A | AA | AA | AA | A | A | A | A | A | A | A |

**[Table 8]**

| | | Example 23 | Example 24 | Example 25 | Example 26 | Example 27 | Example 28 | Example 29 | Example 30 | Example 31 | Example 32 |
|---|---|---|---|---|---|---|---|---|---|---|---|
| Preatreatment liquid | Kind | T1 | T1 | T1 | T1 | T1 | T1 | T1 | T1 | T1 | T1 |
| | Third organic solvent | 0 | 0 | 0 | 0 | 0 | 0 | 0 | 0 | 0 | 0 |
| Colored ink | Kind | C1 | C1 | C1 | C1 | C1 | C1 | C1 | C1 | C1 | C1 |
| | Second organic solvent | 26 | 26 | 26 | 26 | 26 | 26 | 26 | 26 | 26 | 26 |
| | Second organic solvent A | 26 | 26 | 26 | 26 | 26 | 26 | 26 | 26 | 26 | 26 |
| | G/A | 12.0 | 12.0 | 12.0 | 12.0 | 12.0 | 12.0 | 12.0 | 12.0 | 12.0 | 12.0 |
| | Weighted average value of SP values of organic solvents | 27.2 | 27.2 | 27.2 | 27.2 | 27.2 | 27.2 | 27.2 | 27.2 | 27.2 | 27.2 |
| White ink | Kind | W23 | W24 | W25 | W26 | W27 | W28 | W29 | W30 | W31 | W32 |
| | Dispersant | Block | Block | Block | Block | Block | Block | Block | Random | - | Random |
| | First organic solvent | 26 | 28 | 28 | 28 | 28 | 28 | 30 | 26 | 26 | 26 |
| | First organic solvent A | 26 | 28 | 26 | 26 | 26 | 26 | 26 | 26 | 26 | 26 |
| | First organic solvent A + B | 26 | 28 | 28 | 28 | 28 | 26 | 26 | 26 | 26 | 26 |
| | Kind of alkylene glycol alkyl ether | 2 | 2 | 2 | 2 | 2 | 2 | 2 | 2 | 2 | 2 |
| | G/A | 5.5 | 6.0 | 5.5 | 5.5 | 5.5 | 5.5 | 5.5 | 5.5 | 5.5 | 3.3 |
| | Weighted average value of SP values of organic solvents | 29.2 | 26.9 | 26.5 | 26.9 | 26.4 | 27.1 | 27.0 | 26.8 | 26.8 | 26.5 |
| Applied mass (g/m²) | Pretreatment liquid | 1.5 | 1.5 | 1.5 | 1.5 | 1.5 | 1.5 | 1.5 | 1.5 | 1.5 | 1.5 |
| | Colored ink | 8.94 | 8.94 | 8.94 | 8.94 | 8.94 | 8.94 | 8.94 | 8.94 | 8.94 | 8.94 |
| | White ink | 8.49 | 8.49 | 8.49 | 8.49 | 8.49 | 8.49 | 8.49 | 8.49 | 8.49 | 8.49 |
| Applied mass (g/m²) | Third organic solvent | 0 | 0 | 0 | 0 | 0 | 0 | 0 | 0 | 0 | 0 |
| | Second organic solvent | 2.32 | 2.32 | 2.32 | 2.32 | 2.32 | 2.32 | 2.32 | 2.32 | 2.32 | 2.32 |
| | First organic solvent | 2.21 | 2.38 | 2.38 | 2.38 | 2.38 | 2.38 | 2.55 | 2.21 | 2.21 | 2.21 |
| Total mass of first and second organic solvents applied (g/m²) | | 4.53 | 4.70 | 4.70 | 4.70 | 4.70 | 4.70 | 4.87 | 4.53 | 4.53 | 4.53 |
| Total mass of first, second, and third organic solvents applied (g/m²) | | 4.53 | 4.70 | 4.70 | 4.70 | 4.70 | 4.70 | 4.87 | 4.53 | 4.53 | 4.53 |
| Mass of white pigment applied (g/m²) | | 1.02 | 1.02 | 1.02 | 1.02 | 1.02 | 1.02 | 1.02 | 1.02 | 1.02 | 1.02 |
| Evaluation | Lamination strength | A | A | B | B | B | B | B | A | A | AA |
| | Covering property | AA | AA | A | AA | A | A | B | A | AA | A |
| | Adhesiveness | B | AA | B | B | B | B | B | A | AA | AA |
| | Re-jettability | AA | AA | A | AA | A | A | A | AA | AA | B |
| | Jettability | AA | AA | AA | AA | AA | A | A | A | AA | A |

**[Table 9]**

| | | Example 33 | Example 34 | Example 35 | Example 36 | Example 37 | Example 38 | Example 39 | Comparative Example 1 | Comparative Example 2 |
|---|---|---|---|---|---|---|---|---|---|---|
| Preatreatment liquid | Kind | T2 | - | T1 | T1 | T1 | T1 | T1 | T1 | T1 |
| | Third organic solvent | 5 | - | 0 | 0 | 0 | 0 | 0 | 0 | 0 |
| Colored ink | Kind | C1 | C1 | C2 | C3 | C4 | C5 | C6 | C1 | C1 |
| | Second organic solvent | 26 | 26 | 33 | 30 | 13 | 26 | 26 | 26 | 26 |
| | Second organic solvent A | 26 | 26 | 33 | 30 | 13 | 26 | 26 | 26 | 26 |
| | Kind of alkylene glycol alkyl ether | 1 | 1 | 1 | 1 | 1 | 0 | 1 | 1 | 1 |
| | G/A | 12.0 | 12.0 | 12.0 | 12.0 | 12.0 | - | 5.5 | 12.0 | 12.0 |
| | Weighted average value of SP values of organic solvents | 27.2 | 27.2 | 27.2 | 27.2 | 27.2 | 27.6 | 26.9 | 27.2 | 27.2 |
| White ink | Kind | W13 | W13 | W4 | W4 | W4 | W4 | W4 | W4 | W4 |
| | Dispersant | Block | Block | Crosslinked | Crosslinked | Crosslinked | Crosslinked | Crosslinked | Crosslinked | Crosslinked |
| | First organic solvent | 26 | 26 | 26 | 26 | 26 | 26 | 26 | 26 | 26 |
| | First organic solvent A | 26 | 26 | 26 | 26 | 26 | 26 | 26 | 26 | 26 |
| | G/A | 5.5 | 5.5 | 12.0 | 12.0 | 12.0 | 12.0 | 12.0 | 12.0 | 12.0 |
| | Weighted average value of SP values of organic solvents | 26.8 | 26.8 | 27.2 | 27.2 | 27.2 | 27.2 | 27.2 | 27.2 | 27.2 |
| Applied mass (g/m²) | Pretreatment liquid | 1.5 | 1.5 | 1.5 | 1.5 | 1.5 | 1.5 | 1.5 | 1.5 | 1.5 |
| | Colored ink | 8.94 | 8.94 | 8.94 | 8.94 | 8.94 | 8.94 | 8.94 | 11.16 | 8.94 |
| | White ink | 8.49 | 8.49 | 8.49 | 8.49 | 8.49 | 8.49 | 8.49 | 11.17 | 3.13 |
| Applied mass (g/m²) | Third organic solvent | 0.075 | 0 | 0 | 0 | 0 | 0 | 0 | 0 | 0 |
| | Second organic solvent | 2.32 | 2.32 | 2.91 | 2.68 | 1.16 | 2.32 | 2.32 | 2.90 | 2.32 |
| | First organic solvent | 2.21 | 2.21 | 2.21 | 2.21 | 2.21 | 2.21 | 2.21 | 2.90 | 0.81 |
| Total mass of first and second organic solvents applied (g/m²) | | 4.53 | 4.53 | 5.11 | 4.89 | 3.37 | 4.53 | 4.53 | 5.81 | 3.14 |
| Total mass of first, second, and third organic solvents applied (g/m²) | | 4.61 | 4.53 | 5.11 | 4.89 | 3.37 | 4.53 | 4.53 | 5.81 | 3.14 |
| Mass of white pigment applied (g/m²) | | 1.02 | 1.02 | 1.02 | 1.02 | 1.02 | 1.02 | 1.02 | 1.34 | 0.38 |
| Evaluation | Lamination strength | AA | B | A | A | AA | B | AA | C | AA |
| | Covering property | AA | B | A | A | A | A | A | AA | C |
| | Adhesiveness | A | B | B | B | A | A | A | C | AA |
| | Re-jettability | AA | AA | A | A | A | A | A | A | A |
| | Jettabilitv | AA | AA | A | A | A | A | A | A | A |

As listed in Tables 6 to 9, in Examples 1 to 39, it was found that in a case where the image recording method included a step of preparing a white ink containing a white pigment, a first organic solvent, and water, a step of preparing a colored ink containing a colored pigment other than the white pigment, a second organic solvent, and water, and a step of recording an image by applying each of the white ink and the colored ink onto an impermeable base material, and in a region where a region to which the white ink was applied and a region to which the colored ink was applied overlapped each other in plan view, an image was recorded in the step of recording an image under conditions that the total mass of the first organic solvent and the second organic solvent applied per unit area was 5.5 g/m² or less, and the mass of the white pigment applied per unit area was 0.4 g/m² or greater, an image recorded material with excellent lamination strength and an excellent covering property was obtained.

On the contrary, in Comparative Example 1, it was found that the total mass of the first organic solvent and the second organic solvent applied per unit area was greater than 5.5 g/m² in a region where a region to which the white ink was applied and a region to which the colored ink was applied overlapped each other in plan view, and thus the obtained image recorded material had degraded lamination strength.

In Comparative Example 2, it was found that the mass of the white pigment applied per unit area was less than 0.4 g/m² in a region where a region to which the white ink was applied and a region to which the colored ink was applied overlapped each other in plan view, and thus the obtained image recorded material had a degraded covering property.

In Example 6, it was found that since the content of the first organic solvent was 30% by mass or less with respect to the total mass of the white ink and the content of the second organic solvent was 30% by mass or less with respect to the total mass of the colored ink, an image recorded material with excellent lamination strength as compared with Example 5 was obtained.

In Example 13, it was found that since an image was recorded by applying each of the white ink and the colored ink after the application of the pretreatment liquid onto the impermeable base material, an image recorded material excellent in the lamination strength, the covering property, and the adhesiveness as compared with Example 34 was obtained.

In Examples 13 and 15, it was found that since the pigment dispersant contained in the white ink was a crosslinked polymer or a block polymer, an image recorded material excellent in the lamination strength, the covering property, and the adhesiveness as compared with Example 30 was obtained, and an image recorded material with excellent jettability of the white ink and excellent lamination strength as compared with Example 31 was obtained.

In Example 14, it was found that since the weighted average value of the solubility parameters of the organic solvents contained in each of the white ink and the colored ink was 28 MPa^{1/2} or less, an image recorded material having excellent lamination strength and adhesiveness as compared with Example 23 was obtained.

In Example 8, it was found that since the proportion of the first organic solvent A in the organic solvent contained in the white ink was 50% by mass or greater, and the first organic solvent A included at least one kind of alkylene glycol and at least one kind of alkylene glycol alkyl ether, an image recorded material having excellent lamination strength and adhesiveness as compared with Example 9 was obtained.

Further, in Example 12, it was found that since the first organic solvent A included at least one kind of alkylene glycol and at least two kinds of alkylene glycol alkyl ethers, an image recorded material having excellent lamination strength as compared with Example 8 was obtained.

Further, in Example 8, it was found that since the mass ratio of the content of the alkylene glycol to the content of the alkylene glycol alkyl ether was 15.0 or less, an image recorded material having excellent lamination strength and adhesiveness as compared with Example 10 was obtained.

In Example 4, it was found that since the proportion of the second organic solvent A in the organic solvent contained in the colored ink was 50% by mass or greater, and the second organic solvent A included at least one kind of alkylene glycol and at least one kind of alkylene glycol alkyl ether, an image recorded material having excellent lamination strength as compared with Example 38 was obtained.

### <Example 101 and Example 102>

An image recorded material was obtained by the same method as in Example 1 using the inks of four colors listed in Table 10 as the colored inks. The details of the magenta ink, the yellow ink, and the black ink are as listed in Table 5.

The mass of the pretreatment liquid applied was defined as the amount (in units of g/m²) listed in Table 10.

The cyan ink, the magenta ink, the yellow ink, the black ink, and the white ink were jetted in this order after the application of the pretreatment liquid onto the base material. Here, the white ink was applied to the entire colored ink applied onto the base material.

The mass of each of the colored ink and the white ink applied was defined as the amount (in units of g/m²) listed in Table 10.

Examples 101 and 102 were evaluated in the same manner as that for Example 1. The evaluation results are listed in Table 10.

**[Table 10]**

| | | Example 101 | Example 102 |
|---|---|---|---|
| Pretreatment liquid | Kind | T1 | T1 |
| Cyan ink | Kind | L1 | L1 |
| Magenta ink | Kind | M1 | M1 |
| Yellow ink | Kind | Y1 | Y1 |
| Black ink | Kind | Bk1 | Bk1 |
| White ink | Kind | W13 | W14 |
| Applied mass (g/m²) | Pretreatment liquid | 1.5 | 1.5 |
| | Cyan ink | 2.24 | 2.24 |
| | Magenta ink | 2.24 | 2.24 |
| | Yellow ink | 2.24 | 2.24 |
| | Black ink | 2.24 | 2.24 |
| | White ink | 8.49 | 8.49 |
| Applied mass (g/m²) | Third organic solvent | 0 | 0 |
| | Second organic solvent in cyan ink | 0.58 | 0.58 |
| | Second organic solvent in magenta ink | 0.58 | 0.58 |
| | Second organic solvent in yellow ink | 0.58 | 0.58 |
| | Second organic solvent in black ink | 0.58 | 0.58 |
| | First organic solvent | 2.21 | 2.21 |
| Total mass of second organic solvent applied in colored ink (g/m²) | | 2.33 | 2.33 |
| Total mass of first and second organic solvents applied (g/m²) | | 4.53 | 4.53 |
| Total mass of first, second, and third organic solvents applied (g/m²) | | 4.54 | 4.54 |
| Mass of white pigment applied (g/m²) | | 1.02 | 1.02 |
| Evaluation | Lamination strength | AA | AA |
| | Covering property | AA | AA |
| | Adhesiveness | AA | AA |
| | Re-jettability | AA | AA |
| | Jettability | AA | AA |

As listed in Table 10, in Examples 101 and 102 in which the four kinds of colored inks were used, an image recorded material having excellent lamination strength and an excellent covering property was obtained similarly to a case where one kind of colored ink was used.

## Claims

1. An image recording method comprising:
a step of preparing a white ink that contains a white pigment, a first organic solvent having a boiling point of 120°C or higher, and water;
a step of preparing a colored ink that contains a colored pigment other than the white pigment, a second organic solvent having a boiling point of 120°C or higher, and water; and
a step of recording an image by applying each of the white ink and the colored ink onto an impermeable base material,
wherein, an image is recorded in the step of recording an image under conditions that a total mass of the first organic solvent and the second organic solvent to be applied per unit area is 5.5 g/m² or less in a region where a region to which the white ink is applied and a region to which the colored ink is applied overlap each other in plan view, and
a mass of the white pigment to be applied per unit area is 0.4 g/m² or greater.

2. The image recording method according to claim 1,
wherein a content of the first organic solvent is 30% by mass or less with respect to a total mass of the white ink, and
a content of the second organic solvent is 30% by mass or less with respect to a total mass of the colored ink.

3. The image recording method according to claim 1 or 2, further comprising:
a step of preparing a pretreatment liquid that contains an aggregating agent and water,
wherein in the step of recording an image, the image is recorded by applying the pretreatment liquid onto the impermeable base material and applying each of the white ink and the colored ink onto the impermeable base material.

4. The image recording method according to claim 3,
wherein the pretreatment liquid does not contain a third organic solvent having a boiling point of 120°C or higher, or
in a case where the pretreatment liquid contains a third organic solvent having a boiling point of 120°C or higher, a content of the third organic solvent having a boiling point of 120°C or higher is 15% by mass or less with respect to a total amount of the pretreatment liquid.

5. The image recording method according to claim 4,
wherein in the step of recording an image, the image is recorded under a condition that a total mass of the first organic solvent, the second organic solvent, and the third organic solvent to be applied per unit area is 5.5 g/m² or less in a region where a region to which the pretreatment liquid is applied, a region to which the white ink is applied, and a region to which the colored ink is applied overlap each other in plan view.

6. The image recording method according to claim 4 or 5,
wherein in the step of recording an image, the image is recorded under a condition that a mass of the third organic solvent to be applied per unit area is 0.2 g/m² or less in a region where a region to which the pretreatment liquid is applied, a region to which the white ink is applied, and a region to which the colored ink is applied overlap each other in plan view.

7. The image recording method according to any one of claims 1 to 6,
wherein the white ink further contains a pigment dispersant, and
the pigment dispersant is a polymer having a crosslinked structure or a block polymer.

8. The image recording method according to any one of claims 1 to 7,
wherein a weighted average value of solubility parameters of the organic solvents contained in each of the white ink and the colored ink is 28 MPa^{1/2} or less.

9. The image recording method according to any one of claims 1 to 8,
wherein the first organic solvent includes a first organic solvent A having a boiling point of 120°C to 200°C,
a proportion of the first organic solvent A in all organic solvents contained in the white ink is 50% by mass or greater, and
the first organic solvent A includes at least one kind of alkylene glycol and at least one kind of alkylene glycol alkyl ether.

10. The image recording method according to claim 9,
wherein the first organic solvent A includes at least one kind of alkylene glycol and at least two kinds of alkylene glycol alkyl ethers.

11. The image recording method according to claim 9 or 10,
wherein a mass ratio of a content of the alkylene glycol to a content of the alkylene glycol alkyl ethers is 15.0 or less.

12. The image recording method according to any one of claims 1 to 11,
wherein the second organic solvent includes a second organic solvent A having a boiling point of 120°C to 200°C,
a proportion of the second organic solvent A in all organic solvents contained in the colored ink is 50% by mass or greater, and
the second organic solvent A includes at least one kind of alkylene glycol and at least one kind of alkylene glycol alkyl ether.

13. A method of producing a laminate, comprising:
a step of recording the image on an impermeable base material using the image recording method according to any one of claims 1 to 12; and
a step of laminating a base material for lamination on the impermeable base material on a side where the image has been recorded, to obtain a laminate.

14. An image recorded material comprising:
an impermeable base material; and
an image recorded on the impermeable base material,
wherein the image includes a white ink layer in contact with the impermeable base material and containing a white pigment and a colored ink layer in contact with the white ink layer and containing a colored pigment other than the white pigment and has a region where the white ink layer and the colored ink layer overlap each other in plan view, and
a mass of the white pigment per unit area in the white ink layer is 0.4 g/m² or greater.

15. An image recorded material comprising:
an impermeable base material; and
an image recorded on the impermeable base material,
wherein the image includes a pretreatment liquid layer in contact with the impermeable base material and containing an aggregating agent, a white ink layer in contact with the pretreatment liquid layer and containing a white pigment, and a colored ink layer in contact with the white ink layer and containing a colored pigment other than the white pigment and has a region where the pretreatment liquid layer, the white ink layer, and the colored ink layer overlap each other in plan view, and
a mass of the white pigment per unit area in the white ink layer is 0.4 g/m² or greater.

16. A laminate comprising:
the image recorded material according to claim 14 or 15; and
a base material for lamination that is laminated on the image of the image recorded material.

17. An ink set comprising:
a white ink that contains a white pigment, a pigment dispersant, an organic solvent, and water; and
a colored ink that contains a colored pigment other than the white pigment, an organic solvent, and water,
wherein the pigment dispersant is a polymer having a crosslinked structure or a block polymer, and
a weighted average value of solubility parameters of the organic solvents contained in each of the white ink and the colored ink is 28 MPa^{1/2} or less.

18. An ink set comprising:
a white ink that contains a white pigment, a pigment dispersant, an organic solvent, and water; and
a colored ink that contains a colored pigment other than the white pigment and water,
wherein the pigment dispersant is a polymer having a crosslinked structure or a block polymer, and
the organic solvent includes at least one kind of alkylene glycol having a boiling point of 120°C to 200°C and at least one kind of alkylene glycol alkyl ether having a boiling point of 120°C to 200°C.

19. The ink set according to claim 18,
wherein the organic solvent includes at least one kind of alkylene glycol having a boiling point of 120°C to 200°C and at least two kinds of alkylene glycol alkyl ethers having a boiling point of 120°C to 200°C.
